# EUROPEAN PATENT APPLICATION

(11) **EP 4 202 874 A1**
(43) Date of publication of application: **28.06.2023**
(21) Application number: 20951342.3
(22) Date of filing: 24.08.2020
(51) Int. Cl.: G07C 9/25

(54) **INFORMATION PROCESSING DEVICE, INFORMATION PROCESSING METHOD, AND RECORDING MEDIUM**

(71) Applicant: NEC Corporation, 108-8001 Tokyo (JP)
(72) Inventor: IRIE, Fumi, Tokyo 108-8001 (JP); YOSHIMURA, Yoshitaka, Tokyo 108-8001 (JP); SHINGAI, Misuzu, Tokyo 108-8001 (JP); KOKUBO, Honami, Tokyo 108-8001 (JP); TAMURA, Takeo, Tokyo 108-8001 (JP); NORIMATSU, Koui, Tokyo 108-8001 (JP); IZUMO, Kenichi, Tokyo 108-8001 (JP)
(74) Representative: Betten & Resch
(86) International application number: PCT/JP2020/031885
(87) International publication number: WO 2022/044086

(57) **Abstract**

In an information processing device, a fingerprint acquisition means acquires fingerprints of a subject by using a fingerprint scanning device. An image acquisition means acquires hand images of the subject. A finger determination means determines based on the hand images whether or not the subject is placing index fingers on the fingerprint scanning device. An alert means outputs an alert in a case where the subject does not place the index fingers on the fingerprint scanning device.

## Description

### TECHNICAL FIELD

The present disclosure relates to an information processing device, a system, an information processing method, and a recording medium.

### BACKGROUND ART

In an inspection at a passport control, an immigration officer checks contents of a passport of each traveler, and compares a facial photograph attached to the passport with a face of the traveler to determine whether or not to allow an entrant to enter into a country. In order to improve efficiency of the inspection by the immigration officer, a device has been proposed that captures a facial image of the traveler and compares the captured facial image with the photograph of the passport of the traveler (see Patent Documents 1 and 2). In recent years, a device that acquires passport information, the facial image, fingerprints, or the like mainly with respect to foreign entrants prior to the inspection by the immigration officer is known.

### PRECEDING TECHNICAL REFERENCES

### PATENT DOCUMENT

Patent Document 1: Japanese Laid-open Patent Publication No. 2002-008070
Patent Document 2: Japanese Laid-open Patent Publication No. 2016-053896

### SUMMARY

### PROBLEM TO BE SOLVED BY THE INVENTION

It is one object of the present disclosure to improve a technique disclosed in prior art documents described above.

### MEANS FOR SOLVING THE PROBLEM

According to an example aspect of the present disclosure, there is provided an information processing device comprising:
a fingerprint acquisition means configured to acquire fingerprints of a subject by using a fingerprint scanning device;
an image acquisition means configured to acquire hand images of the subj ect;
a finger determination means configured to determine based on the hand images whether or not the subject is placing index fingers on the fingerprint scanning device; and
an alert means configured to output an alert in a case where the subject does not place the index fingers on the fingerprint scanning device.

According to another example aspect of the present disclosure, there is provided an information processing method, comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.

According to still another example aspect of the present disclosure, there is provided a recording medium storing a program, the program causing a computer to perform a process comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.

### BRIEF DESCRIPTION OF THE DRAWINGS

FIG. 1 illustrates an overall configuration of a passport control system according to a first example embodiment.
FIG. 2 is a diagram illustrating an appearance of an information processing device.
FIG. 3 illustrates an internal configuration of a base of the information processing device.
FIG. 4 is a diagram illustrating a functional configuration of the information processing device.
FIG. 5A and FIG. 5B are diagrams illustrating functional configurations of a management server and a tablet.
FIG. 6 is a flowchart of an information acquisition process.
FIG. 7A and FIG. 7B are flowcharts of a passport process and a facial recognition process.
FIG. 8A and FIG. 8B are flowcharts of a fingerprint collection process and an ED card process.
FIG. 9A through FIG. 9D illustrate display examples of a touch panel.
FIG. 10A through FIG. 10C illustrate other display examples of the touch panel.
FIG. 11A through FIG. 11C illustrate other display examples of the touch panel.
FIG. 12A through FIG. 12C illustrate other display examples of the touch panel.
FIG. 13A through FIG. 13D illustrate other display examples of the touch panel.
FIG. 14A through FIG. 14D illustrate other display examples of the touch panel.
FIG. 15A through FIG. 15D illustrate other display examples of the touch panel.
FIG. 16A through FIG. 16D illustrate other display examples of the touch panel.
FIG. 17A through FIG. 17D illustrate other display examples of the touch panel.
FIG. 18A through FIG. 18C illustrate other display examples of the touch panel.
FIG. 19 is a flowchart of an information management process by the management server.
FIG. 20 illustrates a display example of the tablet.
FIG. 21 illustrates another display example.
FIG. 22 illustrates another display example.
FIG. 23 illustrates another display example.
FIG. 24 illustrates another display example.
FIG. 25 illustrates another display example.
FIG. 26 illustrates another display example.
FIG. 27 illustrates another display example.
FIG. 28 illustrates another display example.
FIG. 29 illustrates another display example.
FIG. 30 illustrates another display example.
FIG. 31 illustrates another display example.
FIG. 32 is a flowchart of an information acquisition process according to a second example embodiment.
FIG. 33 is a flowchart of a facial recognition process according to the second example embodiment.
FIG. 34 illustrates a configuration for determining fingers of an entrant at a time of a fingerprint collection.
FIG. 35 illustrates an alert in a case of wrong fingers for the fingerprint collection.
FIG. 36 is a flowchart of a fingerprint collection process according to a third example embodiment.
FIG. 37 illustrates an example of a guide image representing guide hands.
FIG. 38 is a flowchart of a passport process according to a fifth example embodiment.
FIG. 39 is a flowchart of a passport misplacement detection process.
FIG. 40 is a flowchart of a passport process according to a sixth example embodiment.
FIG. 41A and FIG. 41B are diagrams illustrating appearance configuration of an information processing device according to a seventh example embodiment.
FIG. 42A and FIG. 42B are diagrams illustrating examples for projecting information by a projector.
FIG. 43A and FIG. 43B are diagrams illustrating other examples for projecting information by the projector.
FIG. 44 is a flowchart of an information acquisition process according to an eighth example embodiment.
FIG. 45 is a flowchart of a height adjustment process.
FIG. 46 is a block diagram illustrating a configuration of an information processing device according to a ninth example embodiment.
FIG. 47 is a flowchart of an information process according to the ninth example embodiment.

### EXAMPLE EMBODIMENTS

In the following, example embodiments of this disclosure will be described with reference to the accompanying drawings.

### <First Example Embodiment>

A passport control system of this example embodiment is installed at an airport or the like, and is mainly used for a passport control of foreign nationals. The passport control for the foreign nationals is basically carried out in two steps for acquiring personal identification information and carrying out the passport control by an immigration officer. In detail, upon disembarking from the airplane and entering a passport control area, each foreign entrant first operates an information processing device to provide personal identification information. Next, the foreign entrant approaches to a passport control booth where the immigration officer is present and undergoes an inspection by the immigration officer. Once the inspection by the immigration officer is completed, the entrant is permitted to enter the country.

### [Overall Configuration]

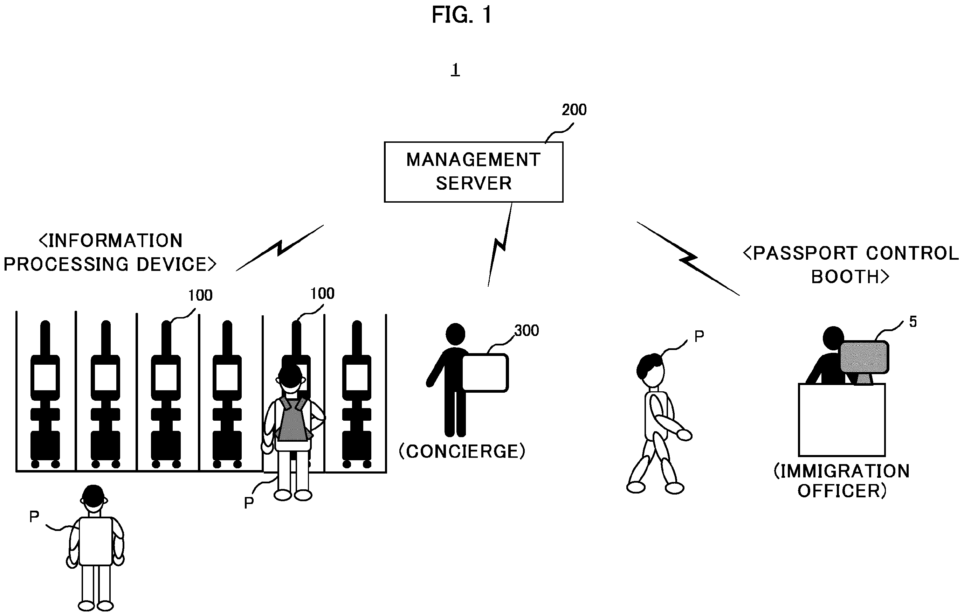

FIG. 1 illustrates an overall configuration of the passport control system according to the first example embodiment. The passport control system 1 includes a plurality of information processing devices 100, a management server 200, a tablet 300, and a PC 5. The information processing device 100 is provided to acquire the personal identification information of each entrant P. The entrant P may not be limited to the foreign national, and can be any persons who wishes to enter the country. Note that the entrant P may be not only a human but also an animal such as a dog, a cat, or a snake. These entrants P are examples of "subjects". The personal identification information includes a facial image and fingerprints. A concierge stands by near the information processing device 100, manages the information processing device 100, and assists operations of the information processing device 100. The concierge is assigned to a predetermined number of the information processing devices 100 to be in charge. The concierge has the tablet 300 to be used when carrying out a management and the like of the information processing device 100. Note that the tablet 300 is an example, and any terminal such as the PC or a smartphone may be used as long as the terminal is a terminal device capable of managing the information processing device 100. In some cases, an assistant (a supporter) who carries out an auxiliary work is assigned to the concierge, but is also referred to as the concierge including the assistant in this specification.

In a passport control booth, the immigration officer stands by and inspects each entrant P who has provided the personal identification information. The PC 5 used by the immigration officer is located in the passport control booth. The immigration officer displays the personal identification information of the entrant P on the PC 5, and conducts the inspection. In FIG. 1, only one passport control booth is illustrated for convenience, but in practice, a plurality of passport control booths are installed.

The management server 200 manages and controls the information processing device 100 and the tablet 300 through wireless communications. Also, the management server 200 communicates with the PC 5 used by the immigration officer via wired or wireless communications. Specifically, the information processing device 100 transmits information provided by the entrant P operating the information processing device 100 to the management server 200. The management server 200 stores information acquired from the information processing device 100, and transmits the acquired information to the tablet 300 and the PC 5. The tablet 300 receives information indicating an operation state of the information processing device 100 from the management server 200, and displays the information. Accordingly, the concierge can comprehend a state of the information processing device 100 of which the concierge is in charge.

In addition, the management server 200 transmits the personal identification information provided by the entrant P by operating the information processing device 100 to the PC 5 of the passport control booth. The immigration officer displays the personal identification information of the entrant P received from the management server 200 on the PC 5, and inspects the contents. In the above-described example embodiment, the information processing device 100, the tablet 300 of the concierge, and the PC 5 of the passport control booth exchange information through the management server 200; however, exchanging of information between the information processing device 100 and the tablet 300 and exchanging of information between the information processing device 100 and the passport control booth may be carried out directly without going through the management server 200.

### [Information Processing Device]

Next, the information processing device will be described.

### (Appearance Configuration)

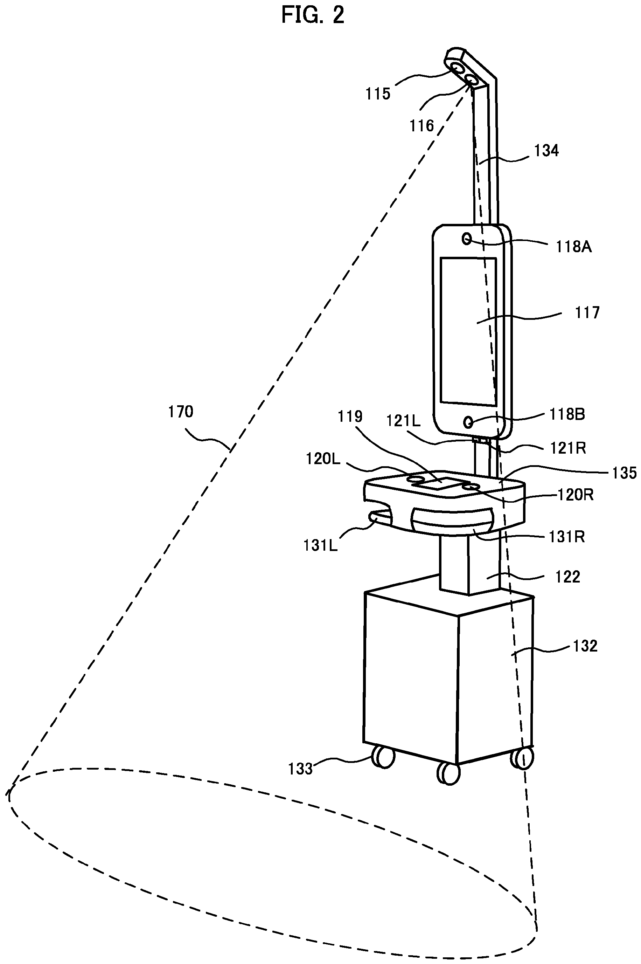

FIG. 2 is a diagram illustrating an appearance of the information processing device 100. The information processing device 100 includes a thermal sensor 115, a surveillance camera 116, a touch panel 117, two facial recognition cameras 118A and 118B, a passport reader 119, a pair of fingerprint scanners 120R and 120L, a pair of cameras 121R and 121L for hands, a height adjustment mechanism 122, a pair of moving handles 131R and 131L, a base 132, moving casters 133, a bar 134, and a table 135. In the following explanation, subscripts are omitted when there is no need to specify individual elements which are formed as a pair. For instance, in a case of specifying either one of the fingerprint scanners 120R and 120L, the specified one is referred to as the "fingerprint scanner 120R", the "fingerprint scanner 120L", or the like, and in a case where either one is not needed to be specified, it is simply referred to as the "fingerprint scanner 120".

The thermal sensor 115 is provided at an uppermost portion of the information processing device 100, and detects an approach of a person to the information processing device 100. Basically, in a state in which the thermal sensor 115 does not detect the person, the information processing device 100 is in a standby (sleep) state. When the entrant P stands in front of the thermal sensor 115, the thermal sensor 115 detects the entrant P as a heat source, and the information processing device 100 activates. Moreover, as will be described later, the thermal sensor 115 is also used to detect a fever of the entrant P.

The surveillance camera 116 is also provided at the uppermost portion of the information processing device 100, and captures a predetermined range in front of the information processing device 100 obliquely from above. The surveillance camera 116 is used to capture a behavior or the like of the entrant P in front of the information processing device 100.

The touch panel 117 is provided at a position corresponding to an upper body of the entrant P standing in front of the information processing device 100 and is movable in a vertical direction along the bar 134. The touch panel 117 has a role as an input section and a display section when the entrant P operates the information processing device 100. On the touch panel 117, guide information necessary for the entrant P to operate the information processing device 100 is displayed. In addition, when the entrant P needs to make some selections with respect to the guide information, a selection button is displayed on the touch panel 117.

The facial recognition camera 118A is provided on an upper face of the touch panel 117, and the facial recognition camera 118B is provided at a lower face of the touch panel 117. Basically, the upper facial recognition camera 118A is used to capture a facial image of a tall person, and the lower facial recognition camera 118B is used to capture a facial image of a short person such as a child. Accordingly, by selecting one facial recognition camera to be used in accordance with a subject to be captured, there is a high possibility that an image suitable for a facial recognition (for instance, a front facial image) can be captured. Note that the facial image of the short person may be captured by the facial recognition camera 118A on the upper face, or the facial image of the tall person may be captured by the facial recognition camera 118B on the lower face. And, by using a plurality of facial recognition cameras, it becomes possible to acquire not only the front facial image but also facial images at various angles.

In a case where the touch panel 117 is movable in the vertical direction along the bar 134 as in the present example embodiment, a single facial recognition camera may be provided near a center in the vertical direction of the touch panel 117. Moreover, in the example embodiment in FIG. 2, the facial recognition cameras 118A and 118B are provided outside an upper display area and a lower display area of the touch panel 117, but instead, a half mirror may be provided above the touch panel 117 and a facial recognition camera may be provided at any position inside the half mirror. By providing the facial recognition camera inside the half mirror in this manner, it becomes possible to capture a facial image without making the entrant being aware of a presence of the camera.

The table 135 is provided below the touch panel 117. The passport reader 119 and the pair of the fingerprint scanners 120R and 120L are provided on a top of the table 135. The passport reader 119 wirelessly reads recorded information from an IC chip in the passport which is placed on the passport reader 119. In detail, the passport reader 119 reads, from the passport, identification items such as a nationality, a name, a date of birth, a passport number, and other identification information, as well as a facial image of the photograph attached to a passport application form (hereinafter collectively referred to as "passport information"). The fingerprint scanners 120 read fingerprints of index fingers of a right hand and a left hand of the entrant P. The fingerprint scanner 120R is for the right hand and the fingerprint scanner 120L is for the left hand.

The height adjustment mechanism 122 moves the table 135 in the vertical direction. The height adjustment mechanism 122 allow the table 135 to be moved to a height that matches the height of the entrant P, that is, a height that allows the entrant P to easily place their fingers on the fingerprint scanners 120R and 120L. The height adjustment mechanism 122 also moves the touch panel 117 along the bar 134. Also, any mechanism for moving the touch panel 117 along the bar 134 may be used. For instance, a rail is provided on a front surface of the bar, and the touch panel 117 is fixed to a slider that can move up and down within the rail, so that by moving the slider up and down by the height adjustment mechanism 122, it is possible to move up and down the touch panel 117.

Above the table 135, the pair of the cameras 121R and 121L for hands is provided. The cameras 121R and 121L for hands capture a state in which the entrant P places the passport on the passport reader 119, a state in which fingers of the right hand and the left hand are placed on the fingerprint scanners 120, and the like. The camera 121R captures a right hand side of the entrant P, that is, a side of the fingerprint scanner 120R, and the camera 121L captures a left hand side of the entrant P, that is, a side of the fingerprint scanner 120L. The cameras 121 may be provided at the lower end of the touch panel 117 or may be provided on the bar 134 at a position behind the touch panel 117.

The base 132 is a housing provided at the lower end of the information processing device 100, and a removable battery, a spare battery, and the like are housed therein. Since the information processing device 100 is powered by a removable battery, it is possible to move and use the information processing device 100 at a location where there is no electrical outlet. The moving casters 133 are provided under the base 132, and the pair of moving handles 131 R and 131 L are provided at the lower end of the table 135. The concierge and other workers can move the information processing device 100 by holding the moving handles 131.

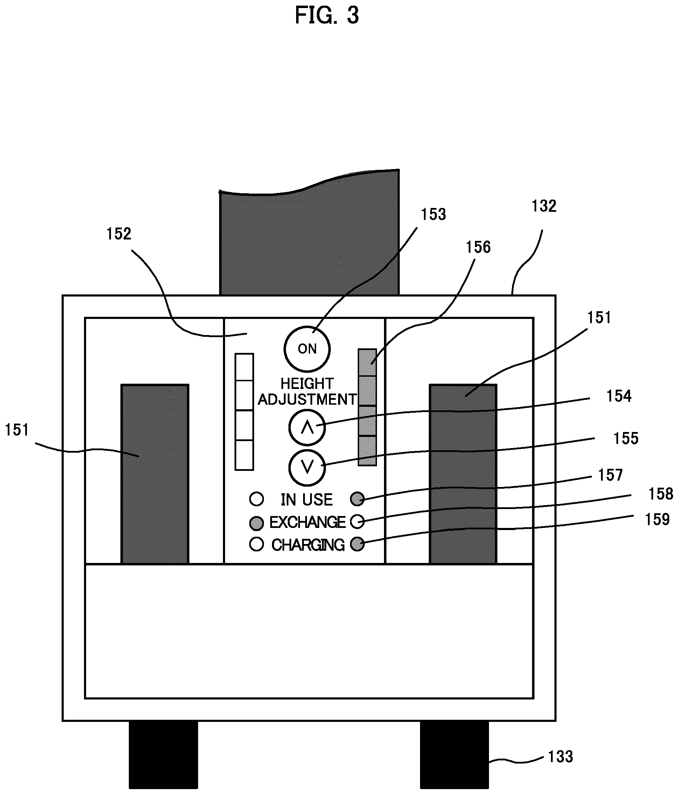

FIG. 3 illustrates an internal structure of the base 132. FIG. 3 illustrates a state in which a front panel of the base 132 is removed and an inside is viewed from the front. An operation panel 152 is provided in a center of the base 132, and batteries 151 are installed in a left space and a right space of the operation panel 152. One battery 151 is in use and another battery 151 is a spare battery. Each of the batteries 151 is electrically connected to a terminal in a state of being placed at a predetermined position, and is charged. The operation panel 152 is provided with a power button 153, and height adjustment buttons 154 and 155. The power button 153 is a main power button of the information processing device 100. The height adjustment buttons 154 and 155 are buttons for raising and lowering the touch panel 117 and the table 135 by the height adjustment mechanism 122, respectively.

In addition, the operation panel 152 includes remaining battery power indicators 156, in-use indicators 157, exchange indicators 158, and charging indicators 159 corresponding to respective batteries. The remaining battery power indicators 156 display the remaining power of respective batteries. Each in-use indicator 157 lights up when a corresponding battery is in use. Each exchange indicator 158 lights up when the corresponding battery needs to be replaced. Each charging indicator 159 lights up when the corresponding battery is charging.

### (Functional Configuration)

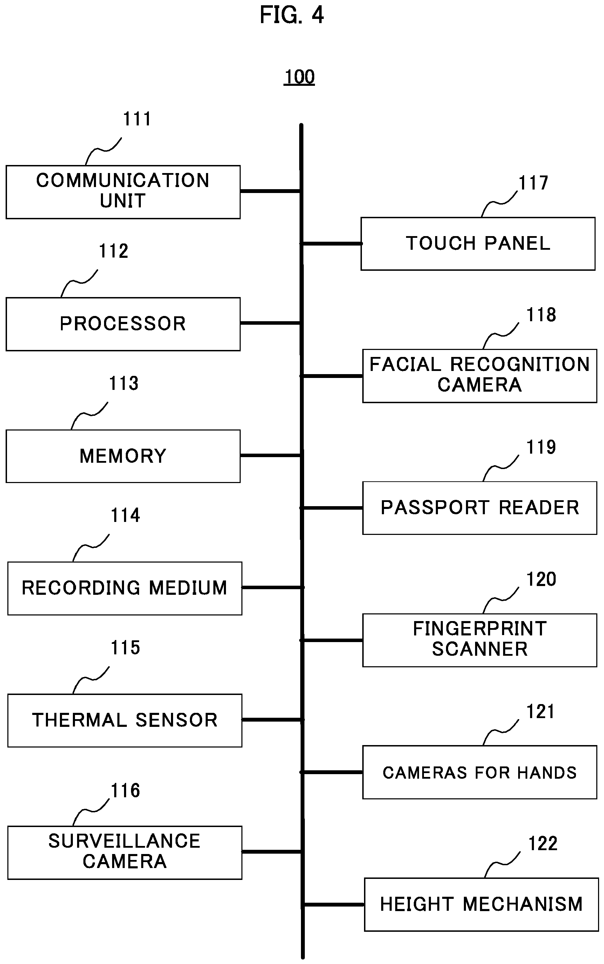

FIG. 4 is a block diagram illustrating a functional configuration of the information processing device 100. As illustrated, the information processing device 100 includes a communication unit 111, a processor 112, a memory 113, and a recording medium 114. The information processing device 100 further includes the thermal sensor 115, the surveillance camera 116, the touch panel 117, the facial recognition cameras 118, the passport reader 119, the fingerprint scanners 120, the cameras 121 for hands, and the height adjustment mechanism 122, which are described with reference to FIG. 2.

The communication unit 111 transmits and receives data to and from an external device. In detail, the communication unit 111 transmits and receives information to and from the management server 200. In addition, in a case where the information processing device 100 is capable of directly communicating with the tablet 300 or the PC 5 of the passport control booth, the communication unit 111 transmits and receives information to and from the tablet 300 or the PC 5.

The processor 112 corresponds to one or more processors each being a computer such as a CPU (Central Processing Unit), and controls the entire information processing device 100 by executing programs prepared in advance. The processor 112 may be a GPU (Graphics Processing Unit), a FPGA (Field-Programmable Gate Array), a DSP (Demand-Side Platform), an ASIC (Application Specific Integrated Circuit), or the like. Specifically, the processor 112 performs various processes, such as a passport process, a facial image process, a fingerprint collection process, and an ED card process, which will be described later.

The memory 113 is formed by a ROM (Read Only Memory), a RAM (Random Access Memory), and the like. The memory 113 is also used as a working memory during executions of various processes by the processor 112.

The recording medium 114 is a non-volatile and non-transitory recording medium such as a disk-shaped recording medium or a semiconductor memory and is formed to be detachable from the information processing device 100. The recording medium 114 records various programs executed by the processor 112. When the information processing device 100 executes various kinds of processes, the programs recorded on the recording medium 114 are loaded into the memory 113, and executed by the processor 112.

### [Management Server]

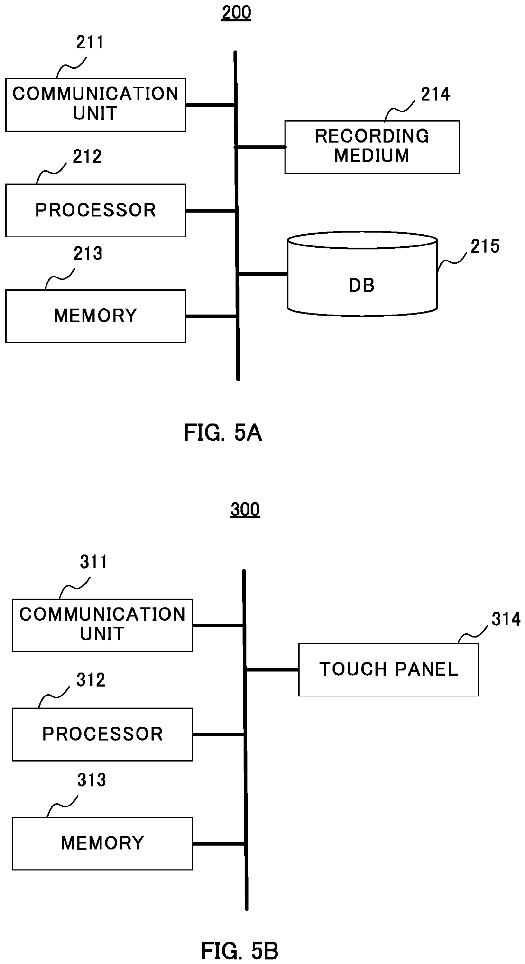

FIG. 5A is a block diagram illustrating a functional configuration of the management server 200. As illustrated, the management server 200 includes a communication unit 211, a processor 212, a memory 213, a recording medium 214, and a database 215.

The communication unit 211 transmits and receives data to and from an external device. In detail, the communication unit 211 transmits and receives information to and from the information processing device 100, the tablet 300 used by the concierge, and the PC 5 of the passport control booth.

The processor 212 corresponds to one or more processors each being a computer such as a CPU that controls the entire management server 200 by executing programs prepared in advance. The processor 212 may be a GPU, a FPGA, a DSP, an ASIC or the like. In detail, the processor 212 receives information acquired by the information processing device 100 from the entrant P, and stores the information in the DB 215 or transmits the information of the entrant P to the PC 5 of the passport control booth.

The memory 213 is formed by a ROM, a RAM, and the like. The memory 213 is also used as a working memory during executions of various processes by the processor 212.

The recording medium 214 is a non-volatile and non-transitory recording medium such as a disk-shaped recording medium or a semiconductor memory and is formed to be detachable from the management server 200. The recording medium 214 records various programs executed by the processor 212. When the management server 200 executes various kinds of processes, the programs recorded in the recording medium 214 are loaded into the memory 213 and executed by the processor 212.

The database 215 stores the personal identification information of the entrant P received through the communication unit 211 and information indicating an operation state of the information processing device 100. The management server 200 may include a keyboard, an input section such as a mouse, and a display section such as a liquid crystal display to allow an administrator to make instructions or inputs.

### [Tablet]

FIG. 5B is a block diagram illustrating an internal configuration of the tablet 300 used by the concierge. As illustrated, the tablet 300 includes a communication unit 311, a processor 312, a memory 313, and a touch panel 314.

The communication unit 311 transmits and receives data to and from the external device. In detail, the communication unit 311 transmits and receives information to and from the management server 200. In addition, when the tablet 300 is capable of directly communicating with the information processing device 100 or the PC 5 of the passport control booth, the communication unit 311 transmits and receives information to and from the information processing device 100 and the PC 5.

The processor 312 corresponds to one or more processors each being a computer such as a CPU that controls the entire tablet 300 by executing programs prepared in advance. The processor 312 may be a GPU, a FPGA, a DSP, an ASIC or the like. In detail, the processor 312 receives information indicating the state of the information processing device 100 or the operation state of the entrant P from the management server 200 or the information processing device 100, and displays the information on the touch panel 314.

The memory 313 is formed by a ROM and a RAM. The memory 313 is also used as a working memory during executions of various processes by the processor 312. The touch panel 314 displays information indicating the state of the information processing device 100 in charge of the concierge carrying the tablet 300 or the operation state by the entrant P.

### [Processes of the Information Processing Device]

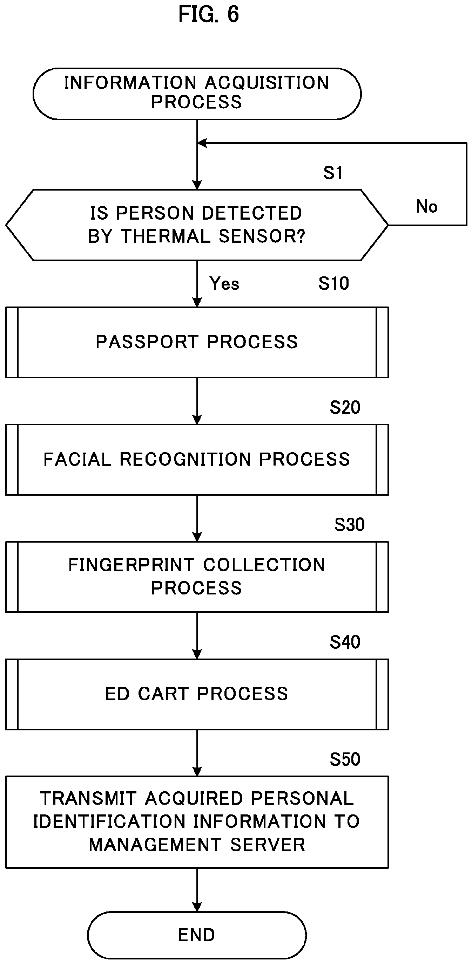

Next, processes executed by the information processing device 100 will be described. FIG. 6 is a flowchart of an information acquisition process that is executed by the information processing device 100. This information acquisition process is realized by executing a program prepared in advance by the processor 112 illustrated in FIG. 4.

The information processing device 100 is in a sleep state during no operation by the entrant P, and detects the front of the information processing device 100 with the thermal sensor 115 (step S1). The "front" of the information processing device 100 is an area where the entrant P who operates the information processing device 100 stands, and is, for instance, an area depicted by dashed lines 170 in FIG. 2. When the entrant P stands in front of the information processing device 100, the thermal sensor 115 detects the entrant P (step S1: Yes), and the information processing device 100 executes the passport process (step S10). The passport process is a process for reading the passport information from the passport of the entrant P.

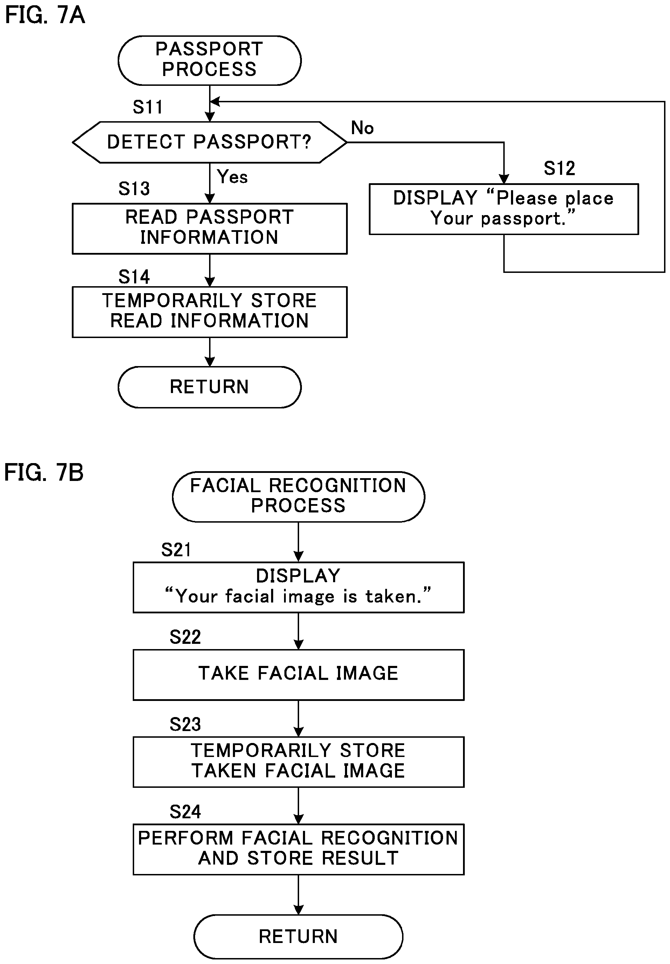

FIG. 7A is a flowchart of the passport process. In detail, the information processing device 100 detects each passport by the passport reader 119 (step S11). When the passport is not detected (step S11: No), the information processing device 100 displays a message such as "Please place your passport." on the touch panel 117 (step S12). On the other hand, when a passport is detected (step S11: Yes), the passport reader 119 reads the passport information from the IC chip in the passport (step S13). Here, the passport information includes identification items such as a nationality, a name, a date of birth, a passport number, and the like, as well as a facial image read from the photograph affixed to the passport application form. Next, the information processing device 110 temporarily stores the read passport information in the memory 113 (step S14). After that, the process returns to a main routine in FIG. 6.

Next, the information processing device 100 executes the facial recognition process (step S20). The facial recognition process is a process in which a facial image of the entrant P is taken and the facial recognition is performed by matching with the facial image included in the passport information. FIG. 7B is a flowchart of the facial recognition process. First, the information processing device 100 displays a message such as "Your facial image is taken." on the touch panel 117 (step S21). In addition, if necessary, the information processing device 100 may display a numeral of a countdown indicating a photograph timing or the like. Next, the facial recognition camera 118 captures a facial image of the entrant P (step S22). At this time, the information processing device 100 takes an image of the entrant P using one of the facial recognition cameras 118A and 118B depending on the height of the entrant P.

Next, the information processing device 100 temporarily stores the facial image captured by the facial recognition camera 118 in the memory 113 (step S23). Next, the information processing device 100 performs the facial recognition by matching the facial image captured by the facial recognition camera 118 with the facial image included in the passport information read from the passport, and stores a recognition result in the memory 113 (step S24). After that, the process returns to the main routine in FIG. 6.

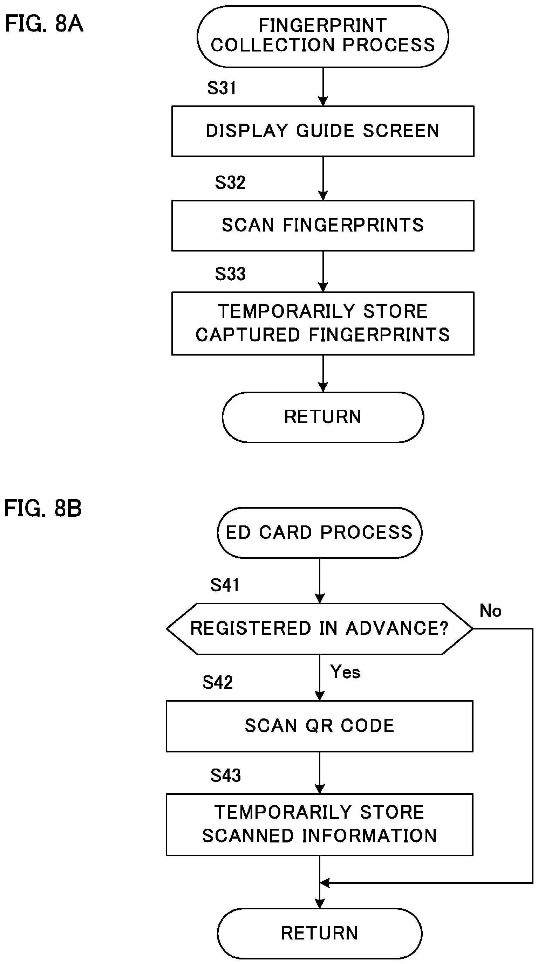

Next, the information processing device 100 performs the fingerprint collection process (step S30). The fingerprint collection process is a process which collects fingerprints of the entrant P. In detail, the fingerprint collection process takes fingerprints of index fingers of the right hand and the left hand of the entrant P. FIG. 8A is a flowchart of the fingerprint collection process. First, the information processing device 100 displays a guide screen for taking fingerprints on the touch panel 117 (step S31). For instance, the information processing device 100 displays, on the touch panel 117, a guide image indicating an arrangement method of fingers on the fingerprint scanners 120 or the like. Next, each of the fingerprint scanners 120R and 120L scans the fingerprints of the index fingers of the entrant P (step S32), and temporarily stores the fingerprint images in the memory 113 (step S33). After that, the process returns to the main routine in FIG. 6.

Next, the information processing device 100 performs an ED (Embarkation Disembarkation) card process (step S40). The ED card is regarded as a card in which necessary items are filled in when entering and leaving the country of travel, and is also called an immigration card. An ED card process corresponds to a process in which ED information registered in advance by the entrant P is scanned from a terminal device such as a smartphone of the entrant P. When the entrant P has registered the ED information in advance, a QR code (registered trademark) associated with the registered ED information is issued, and the entrant P stores this code in the smartphone.

FIG. 8B is a flow chart of the ED card process. First, the information processing device 100 asks whether the entrant P has registered the ED information in advance (step S41). When the ED has not been registered yet (step S41: No), the ED card process is terminated. On the other hand, when the ED information has been registered in advance (step S41: Yes), the information processing device 100 scans the QR code displayed on the smartphone or the like by the entrant P (step S42). In detail, the entrant P displays the QR code on the smartphone, and holds the smartphone over the passport reader 119 or the like. The passport reader 119 reads the QR code from the smartphone. The information processing device 100 temporarily stores the read ED information in the memory 113 (step S43). After that, the process returns to the main routine in FIG. 6.

In the above-described example embodiment, the QR code is read by the passport reader 119, but the QR code may be read by the facial recognition cameras 118 or the cameras 121 for hands. An IC card reader may be provided in the information processing device 100 to perform wireless communications between the smartphone of the entrant P and the information processing device 100 to acquire registered ED from the smartphone of the entrant P.

Next, the information processing device 100 transmits the personal identification information acquired in steps S10 to S40 to the management server 200 (step S50). Here, the personal identification information transmitted to the management server 200 includes the passport information acquired by the passport process, the facial image and a facial recognition result acquired by the facial recognition process, the fingerprint images acquired by the fingerprint collection process, and the ED information acquired by the ED card process. At this time, the information processing device 100 displays a message such as "Please proceed to the passport control booth" on the touch panel 117 to urge the entrant P to proceed to the passport control booth.

### [Display Example of the Information Processing Device]

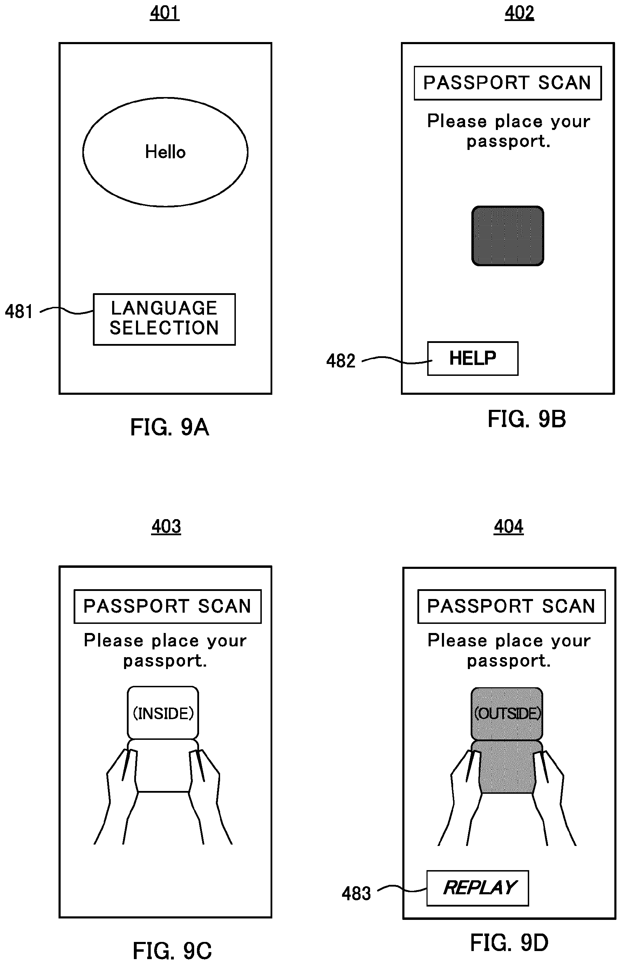

Next, an example of an image, which the information processing device 100 displays on the touch panel 117 in the above-described information acquisition process, will be described. Note that an order of the display examples described below is merely an example, and the display order can be arbitrarily changed. First, when the entrant P comes in front of the information processing device 100, and the thermal sensor 115 detects the entrant P, the information processing device 100 displays an initial image 401 illustrated in FIG. 9A on the touch panel 117. A language selection button 481 included in the initial image 401 will be described later.

Next, the information processing device 100 displays a guide image of a passport scan. In detail, the information processing device 100 sequentially displays images 402 to 404 depicted in FIG. 9B to FIG. 9D. Each of the images 402 to 404 contains a message requesting that the passport be placed on the passport reader 119. The image 402 depicts an appearance of the passport reader, the image 403 depicts that an outer face of the passport is overlaid on the passport reader 119, and the image 404 depicts that an inner face of the passport is overlaid on the passport reader 119. A help button 482 included in the image 402 and a replay button 483 included in the image 404 will be described later.

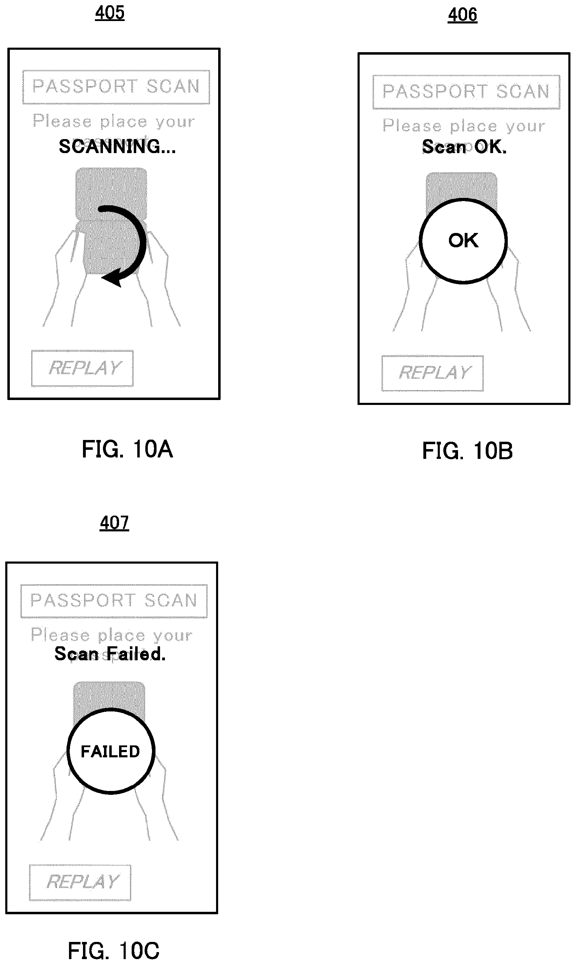

When the entrant P overlays the passport on the passport reader 119, an in-scanning image 405 depicted in FIG. 10A is displayed on the touch panel 117. When the passport is successfully scanned, an image 406 indicating a scan OK is displayed as illustrated in FIG. 10B. On the other hand, when the scanning of the passport fails, an image 407 indicating that the scan failed is displayed as illustrated in FIG. 10C. When the scanning of the passport fails, the entrant P tries again this scan operation of the passport.

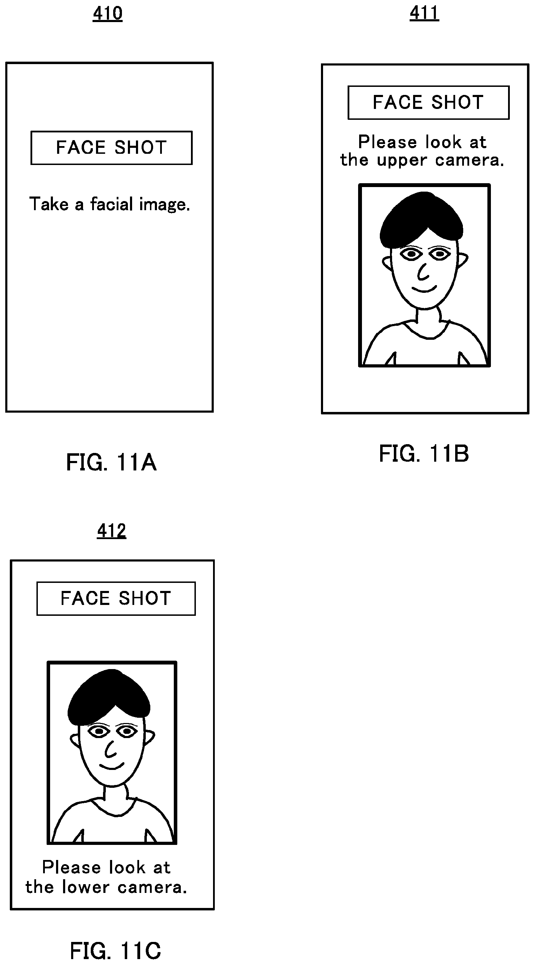

When the passport is successfully scanned, a guide image 410 for capturing a face is displayed as illustrated in FIG. 11A. The information processing device 100 determines which of the upper facial recognition camera 118A and the lower facial recognition camera 118B is to be used according to the height of the entrant P. When the upper facial recognition camera 118A is used, the information processing device 100 displays an image 411 illustrated in FIG. 11B, and prompts the entrant P to view the upper facial recognition camera 118A. On the other hand, when the facial recognition camera 118B on the lower face is used, the information processing device 100 displays an image 412 illustrated in FIG. 11C, and prompts the entrant P to look at the facial recognition camera 118B on the lower face.

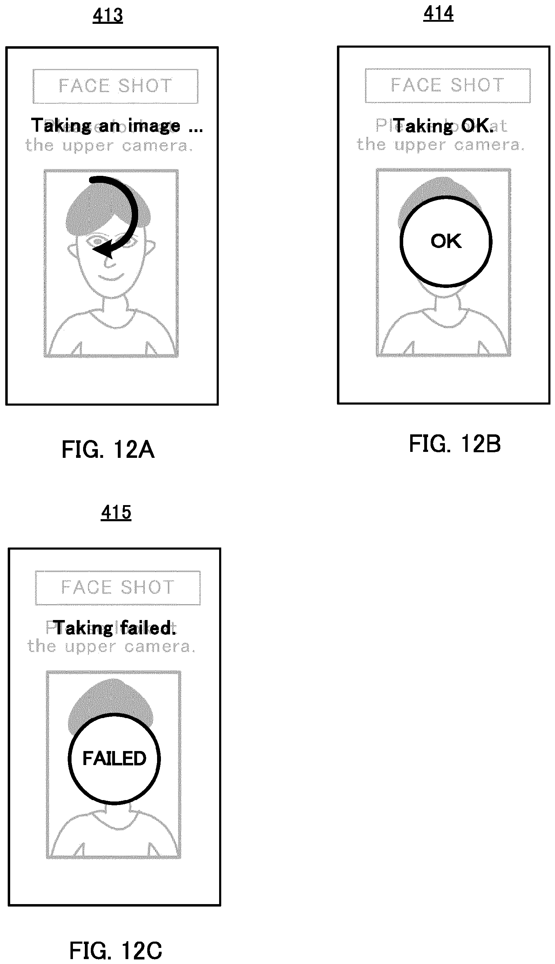

After that, when the facial recognition camera 118 starts taking the facial image, a taking-in-progress image 413 illustrated in FIG. 12A is displayed. When an appropriate facial image is captured, a taking OK image 414 illustrated in FIG. 12B is displayed. On the other hand, when the appropriate facial image is not captured, a taking failure image 415 illustrated in FIG. 12C is displayed.

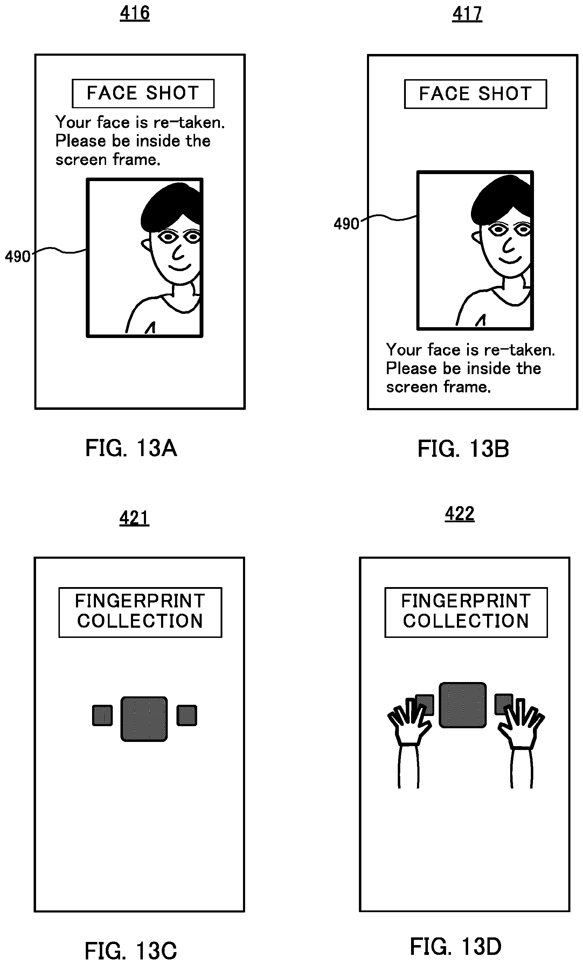

In a case of the taking failure, the information processing device 100 displays the guide information for appropriately taking the facial image. For instance, when the face of the entrant P is not within a photo frame 490 as illustrated in an image 416 in FIG. 13A, the information processing device 100 displays a message prompting the entrant P to be within the photo frame 490. Here, the information processing device 100 displays messages at respective positions corresponding to the facial recognition cameras 118 used for taking the facial image. In detail, in a case of taking the facial image by using the upper facial recognition camera 118A, the information processing device 100 displays a message at an upper side of the photo frame 490 as illustrated in the image 416 in FIG. 13A. On the other hand, when the facial recognition camera 118B on the lower face is used to take a facial image, the information processing device 100 displays a message on a lower side of the photo frame 490 as illustrated in an image 417 in FIG. 13B. In addition, in a case of taking facial images by using the two facial recognition cameras 118, the information processing device 100 can appropriately determine a place where the message is displayed, depending on the height of the entrant, a position of the face of the entrant in the image 416, or a position of a line of sight of the entrant which is detected based on the facial image.

In addition, other reasons why the taking of the facial image fails include that the entrant P is not looking at a direction of the camera or that the entrant P is wearing sunglasses or a mask. When the entrant P does not correctly look at a direction of the camera, a message such as "Please look at the camera" is displayed in the image 416 or 417, and when the entrant P is wearing the sunglasses or the mask, a message such as "Please take off the sunglasses (or the mask)" is displayed in the image 416 or 417.

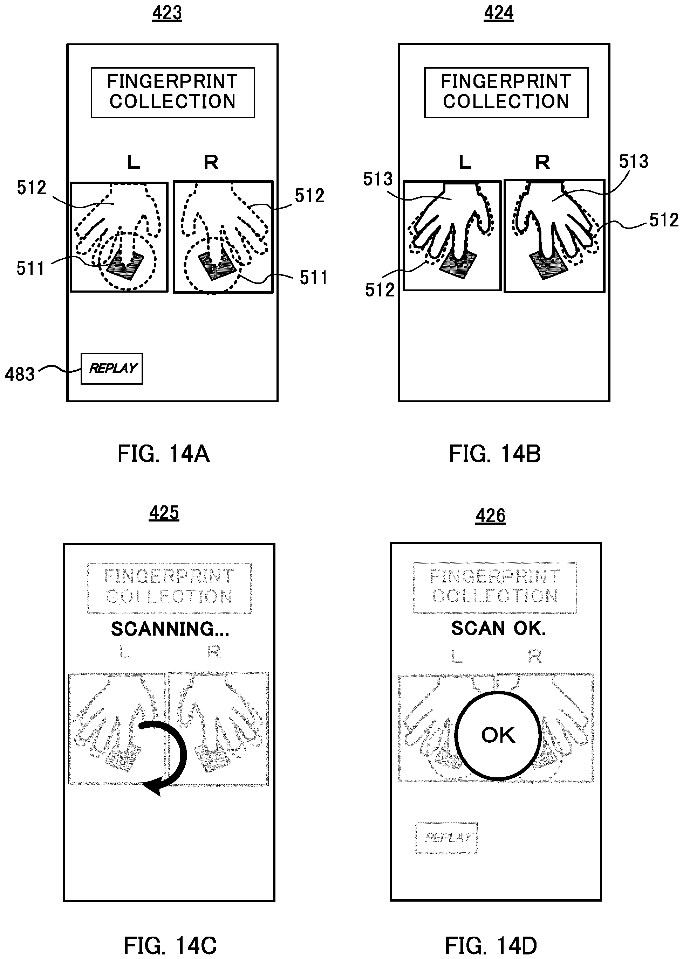

When the facial recognition process is completed, the fingerprint collection process is performed. The information processing device 100 first displays a guide image for explaining a method for collecting fingerprints. In detail, the information processing device 100 sequentially displays images 421 and 422 illustrated in FIG. 13C and FIG. 13D. The image 421 illustrates the fingerprint scanners, and the image 422 illustrates a placement example of fingers with respect to the fingerprint scanners. Subsequently, the information processing device 100 displays an image 423 illustrated in FIG. 14A. In the image 423, guide hands 512 indicating correct placements of the fingers of the right hand and the left hand are displayed on respective images near the left and right fingerprint scanners 120, which are taken by the cameras 121 for hands. In addition, dashed line circles 511 are displayed to indicate that respective index fingers are placed on the fingerprint scanners 120. Note that the replay button 483 will be described later.

When the entrant P actually places fingers on the fingerprint scanners 120, images are captured by the cameras 121 for hands. As illustrated in FIG. 14B, the information processing device 100 displays an image 424 including hands 513 of the entrant P captured by the cameras 121 for the hands. The entrant P refers to positions of the guide hands 512 in the image 424, and places hands of the entrant P in correct positions.

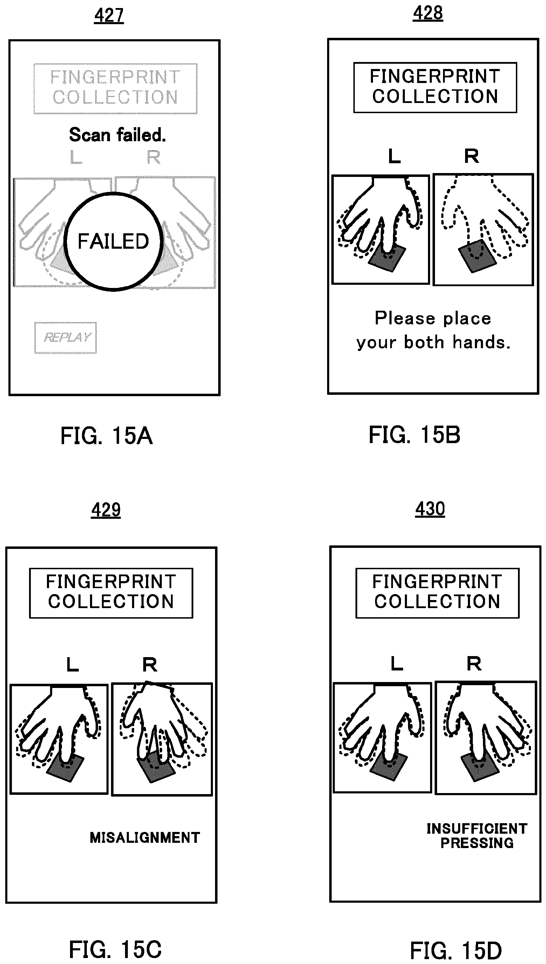

In response to contacts of the fingers of the entrant P, the fingerprint scanners 120 starts to scan the fingerprints, and a scan-in-progress image 425 illustrated in FIG. 14C is displayed. When the fingerprints are successfully scanned, a scan OK image 426 illustrated in FIG. 14D is displayed. On the other hand, when the scan of the fingerprints fails, a scan failure image 427 illustrated in FIG. 15A is displayed. The scan of the fingerprints may fail for several reasons. For instance, in a case where the entrant P is only one hand on the fingerprint scanners 120, the information processing device 100 displays an image 428 illustrated in FIG. 15B. In the image 428, a message is displayed to request that both hands be placed on the fingerprint scanners 120.

In a case where the fingers are misaligned with respect to the fingerprint scanners 120, the information processing device 100 displays an image 429 depicted in FIG. 15C. In the image 429, a message is displayed indicating that a position of the right hand is misaligned. In the image 429, since positions of the fingers of the left hand are not misaligned but the positions of the fingers of the right hand are misaligned, a message of "MISALIGNMENT" is displayed only under the image of the right hand. In a case where only the positions of the fingers of the left hand are misaligned, the message of "MISALIGNMENT" is displayed only under the image of the left hand. In addition, in a case where the positions of the fingers of both hands are misaligned, the messages of "MISALIGNMENT" are displayed under the images of both hands, respectively. In addition, when the facial recognition is performed using the lower facial recognition camera 118B, the message may be displayed on the lower side of a hand image, and when the facial recognition is performed using the upper facial recognition camera 118A, the message may be displayed on the upper side of the hand image. Moreover, depending on whether or not the positions of the fingers are correct, a color of the guide hands 512 or a thickness of a line may be changed. For instance, the guide hands 512 may be displayed in a first display (for instance, a dashed red line) until fingers are respectively placed in the correct positions, and the guide hands 512 may be displayed in a second display (for instance, a solid green line) when the fingers are respectively placed in the correct positions.

In a case where the fingers are not pressed sufficiently against the fingerprint scanners 120, the information processing device 100 displays an image 430 depicted in FIG. 15D. In the image 430, a message is displayed indicating insufficient pressure of the index finger of the right hand against the fingerprint scanners 120. Also, in this case, the message is displayed below the image of the fingers of either the right hand or the left hand of which the pressure of the fingers is insufficient. In this way, the information processing device 100 displays, on the touch panel 117, a reason why the scanning of the fingerprints has failed, and prompts to collect the fingerprints again.

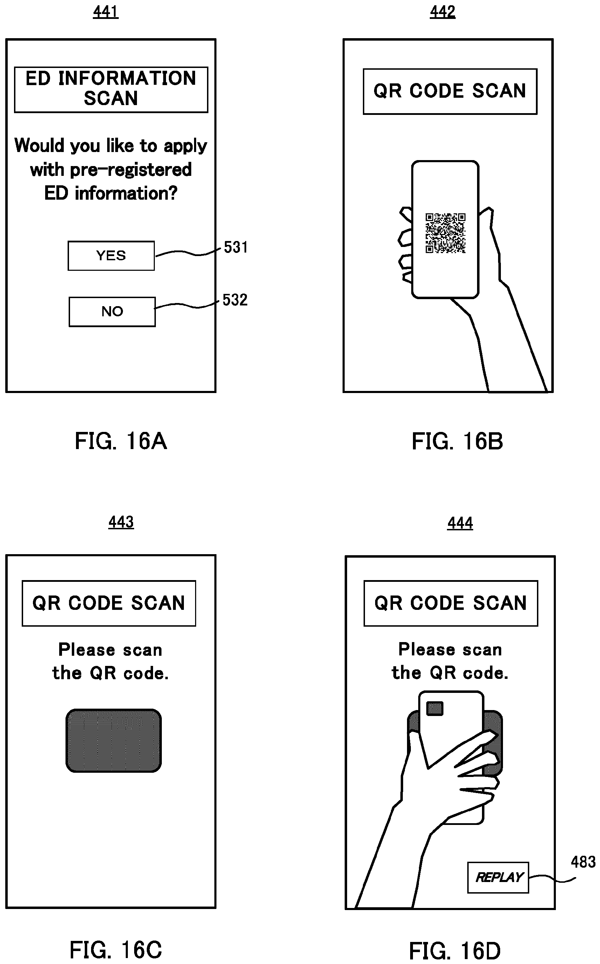

When the fingerprint collection process is completed, the ED card process is performed. The information processing device 100 first displays an image 441 depicted in FIG. 16A, and requests the entrant P whether to use the pre-registered ED information. The image 441 includes a YES button 531 and a NO button 532. When the entrant P presses the NO button 532, the ED card process is terminated. On the other hand, when the entrant P presses the YES button 531, the information processing device 100 displays a guide image of a scan operation of the QR code. Specifically, the information processing device 100 sequentially displays images 442 to 444 in FIG. 16B to 16D. The image 442 is an image that prompts to display the QR code corresponding to the pre-registered ED information on the smartphone. The image 443 illustrates the passport reader 119 for use in scanning the QR code. The image 444 illustrates that the QR code is held over the passport reader 119. Although the replay button 483 is displayed on the image 444, this button will be described later.

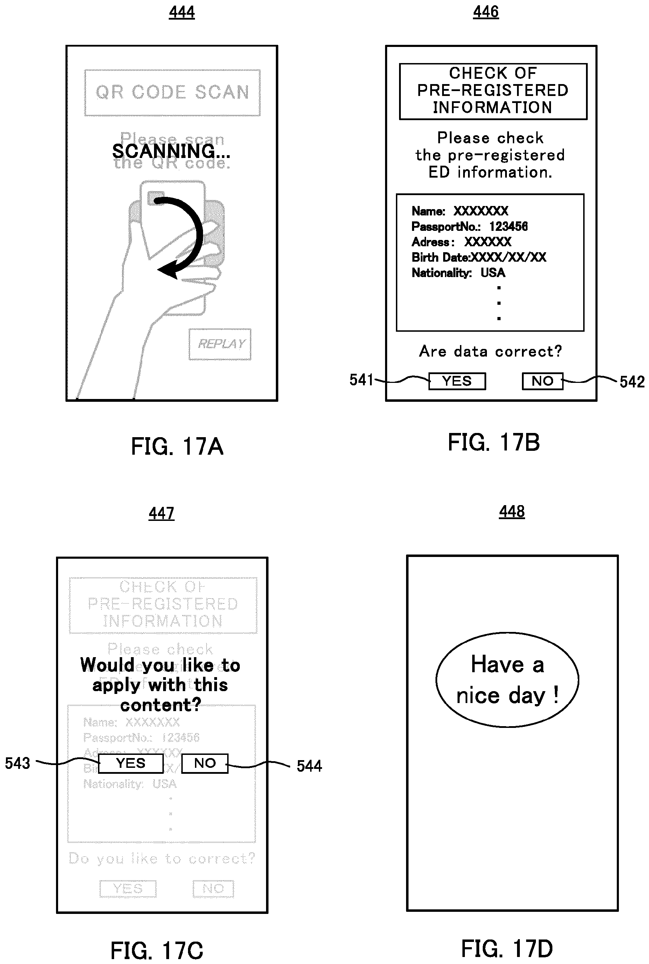

When the entrant P holds the QR code over the passport reader 119, the scanning of the QR code is started, and a scan-in-progress image 445 depicted in FIG. 17A is displayed. When the QR code is correctly scanned, an image 446 depicted in FIG. 17B is displayed. The image 446 includes the ED information registered in advance, a message prompting the entrant P to confirm whether or not correction is required, a YES button 541, and a NO button 542. The entrant P presses the YES button 541 or the NO button 542 depending on whether correction is necessary. When the YES button 541 is pressed, it becomes possible to input to the image 446, and the entrant P makes necessary correction. When there is no correction or the correction is completed, a confirmation image 447 depicted in FIG. 17C is displayed. The confirmation image 447 include a YES button 543 and a NO button 544. When the entrant P presses the NO button 544, this screen returns to the image 446 depicted in FIG. 17B. On the other hand, when the entrant P presses the YES button 543, an end screen 448 as depicted in FIG. 17D is displayed, and the information acquisition process is terminated.

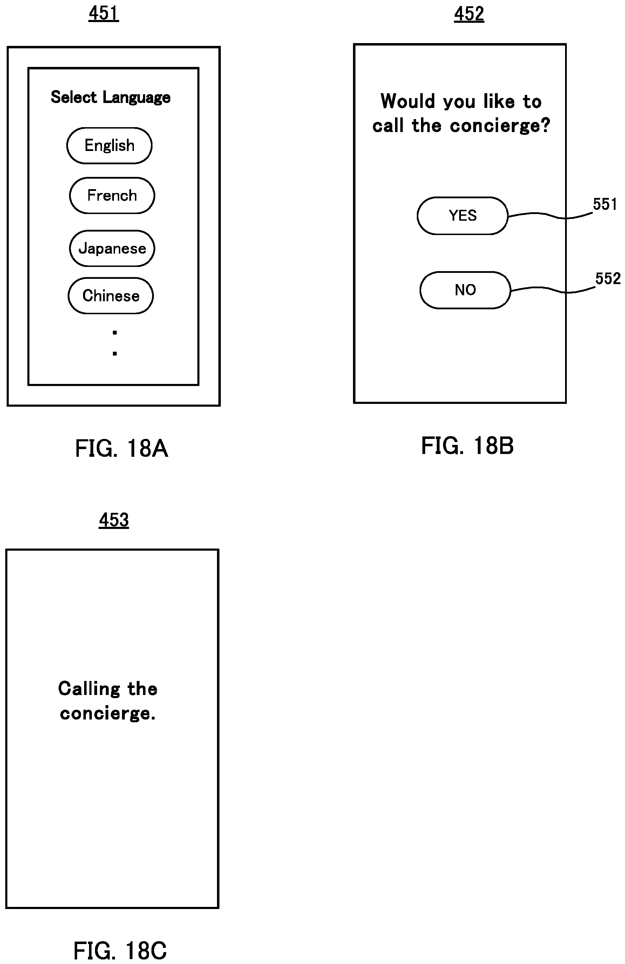

The language selection button and the help button can be displayed in all images or any of the images depicted in FIG. 9 to FIG. 17. FIG. 9A illustrates an example of an image in which the language selection button 481 is displayed. When the language selection button 481 is pressed, an image 451 depicted in FIG. 18A is displayed, and the entrant P can select one language used in operations of the information processing device 100.

The help button is used to call a concierge. FIG. 9B illustrates an example of an image in which the help button 482 is displayed. When the help button 482 is pressed, first, an image 452 depicted in FIG. 18B is displayed. In the image 452, when a YES button 551 is pressed, the information processing device 100 transmits call information to the tablet 300 of the concierge and displays an image 453 depicted in FIG. 18C. A NO button 552 is to cancel. When the concierge arrives at the information processing device 100, and performs a predetermined operation, the display of the image 453 is terminated.

Further, in each of the passport process, the facial recognition process, the fingerprint collection process, and the ED card process which are described above, the replay button can be displayed on an image following the guide image of the operation method of the information processing device 100. The replay button is a button for instructing a replay of the guide image indicating the operation method of the information processing device 100. In detail, the replay button 483 is displayed on the image 404 in FIG. 9D, the image 423 in FIG. 14A, the image 444 in FIG. 16D, and the like. The replay button 483 is a button for performing the replay of the guide image previously displayed. For instance, when the entrant P presses the replay button 483 in the image 404 in FIG. 9D, the images 402 to 404 in FIG. 9B to FIG. 9D are replayed in this order. When the entrant P presses the replay button 483 on the image 423 of FIG. 14A, images 421 to 423 of FIG. 13C and FIG. 14A are replayed in this order. Moreover, when the entrant P presses the replay button 483 on the image 444 in FIG. 16D, the images 442 to 444 in FIG. 16B to 16D are replayed in this order. In addition to the above, the replay button can be provided on the last image of a series of the guide images in the facial recognition process or the ED card process. In this case, when the replay button displayed at the end of the series of guide images related to the facial recognition process is pressed, a series of guide images related to the facial recognition process is replayed. Also, when the replay button displayed at an end of a series of the guide images for the ED card process is pressed, a series of the guide images for the ED card process is replayed. In a case where the replay button 483 is selected more than a predetermined number of times, the information processing device 100 may determine that the entrant P is in trouble with the operation method, and may automatically send an alert to call the concierge to the tablet 300.

### [Processes of Management Server]

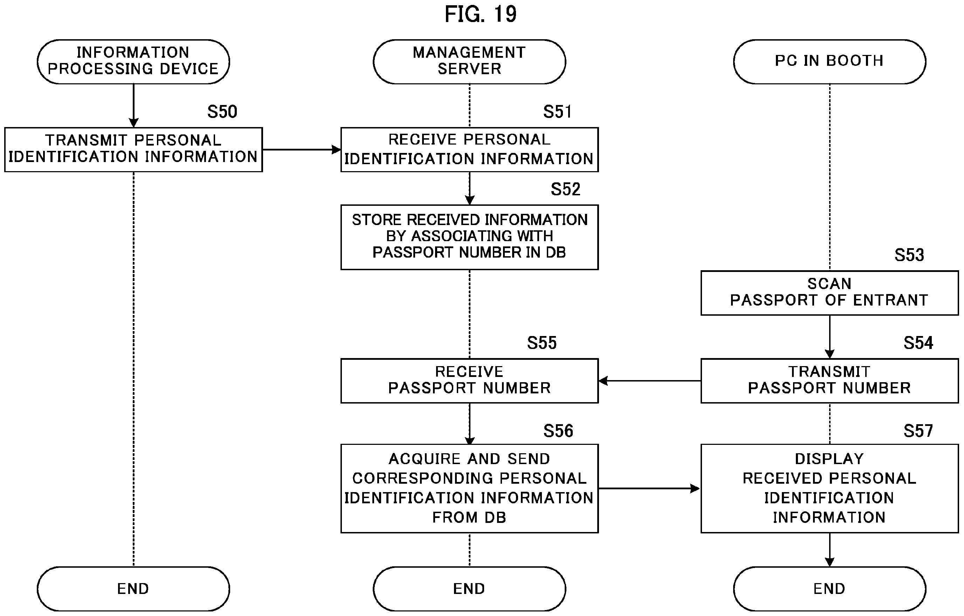

Next, processes of the management server performed in parallel with the information acquisition process will be described. FIG. 19 is a flowchart of an information management process performed by the management server 200. This information management process is realized by the processor 212 depicted in FIG. 5A executes a program prepared in advance.

First, the information processing device 100 transmits the acquired personal identification information to the management server 200 (step S50), and the management server 200 receives the personal identification information (step S51). Next, the management server 200 stores the received personal identification information in the DB 215 in association with the passport number (step S52). In this manner, the personal identification information provided by the entrant P by operating the information processing device 100 are accumulated in the DB 215 of the management server 200.

When the operation of the information processing device 100 is terminated, the entrant P goes to the passport control booth. When the entrant P presents a passport to the immigration officer at the passport control booth, the immigration officer reads the passport of the entrant P using the PC 5 (step S53). The PC 5 displays the scanned passport information on a display section or the like, and transmits a passport number to the management server 200 (step S54).

The management server 200 receives the passport number (step S55), acquires the personal identification information corresponding to the passport number from the DB 215, and transmits the acquired personal identification information to the PC 5 of the passport control booth (step S56). In the PC 5 of the passport control booth, the received personal identification information is displayed on the display section or the like (step S57). Accordingly, the personal identification information, which is acquired by the information processing device 100 regarding the entrant P who comes to the passport control booth, is displayed on the display section of the PC 5 in the passport control booth. The immigration officer examines whether or not to allow an entry into the country by referring to the facial image included in the displayed personal identification information, the facial recognition result, and the like.

Incidentally, when the entrant P who needs to provide information by the information processing device 100 has come to the passport control booth without performing an operation on the information processing device 100, the PC 5 in the passport control booth may report the tablet 300 of the concierge and display map information indicating an ID of the information processing device 100 available to use (which is used by no one) and a route to reach the information processing device 100 on the display section of the PC 5. In this case, the immigration officer can print out the map information described above and pass the map information to the entrant P, and correctly guide the entrant P to the information processing device 100.

### [Display Example of the Tablet]

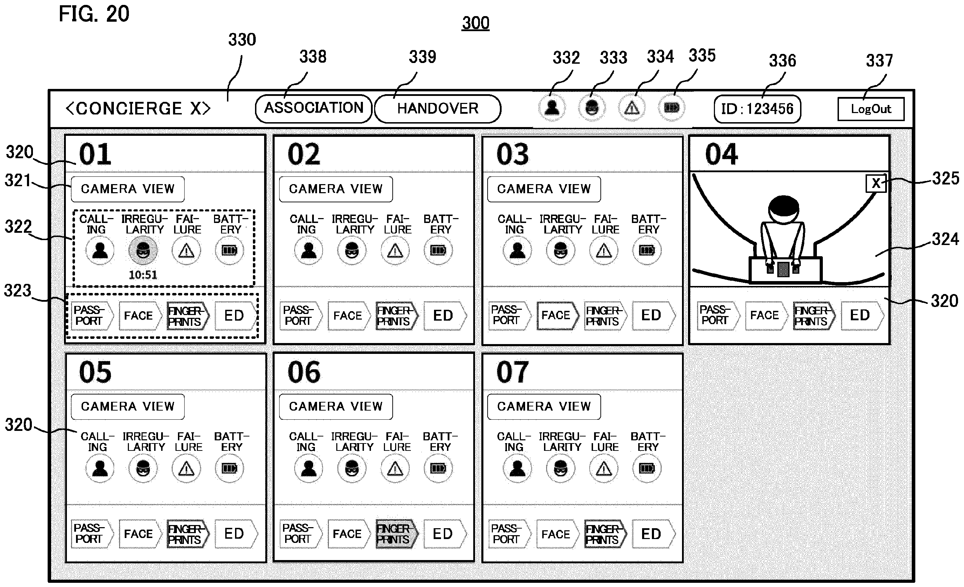

Next, an example of the display of the tablet 300 used by the concierge will be described. While the entrant P is operating the information processing device 100, the information processing device 100 acquires the personal identification information of the entrant P and transmits the personal identification information to the management server 200. The management server 200 transmits the acquired information to the tablet 300 carried by the concierge in charge. FIG. 20 illustrates an example display of the tablet 300 of the concierge. A plurality of the information processing devices 100 are associated with one concierge. The example display in FIG. 20 illustrates the display screen of the tablet 300 of the concierge X.

As illustrated, the tablet 300 displays a device list screen which displays information of the plurality of the information processing devices 100 associated with the concierge X. The device list screen includes an individual information area 320 for displaying individual information for each of the information processing devices 100 and an overall information area 330 for displaying overall information. In the example in FIG. 20, the concierge is in charge of seven information processing devices 100 of device numbers "01" to "07", and seven individual information areas 320 corresponding to respective information processing devices 100 are displayed.

Each of the individual information areas 320 includes a camera view button 321, an individual alert area 322, and a process display area 323. The camera view button 321 is a button for displaying the captured image of the surveillance camera 116. When the concierge presses the camera display button 321, a surveillance camera image 324 captured by the surveillance camera 116 is displayed as illustrated in the individual information area 320 of the device number "04" in FIG. 20. With the surveillance camera image 324 displayed, when the concierge presses a close button 325 in the surveillance camera image 324, the display of the surveillance camera image 324 ends.

The surveillance camera image 324 is an image of the entrant P captured by the surveillance camera 116 of the information processing device 100. As illustrated in FIG. 2, since the surveillance camera 116 is provided at the uppermost portion of the information processing device 100, the surveillance camera image 324 is an image such that the entrant P is viewed from obliquely above. Since the surveillance camera image 324 is an image including the entrant P and the table 135 of the information processing device 100 in front of the entrant P, the concierge can comprehend a state in which the entrant P is conducting operations by viewing at the surveillance camera image 324. Note that not only the image of the surveillance camera 116 but also images of the facial recognition cameras 118 or the cameras 121 for hands as the surveillance cameras may be used. In this case, the images of the facial recognition cameras 118 and the cameras 121 for the hands can also be displayed as the surveillance camera images 324.

The individual alert area 322 is an area for displaying an alert which is generated individually for each of the information processing devices 100 when the entrant P operates the information processing device. In the example in FIG. 20, four marks are displayed: "calling," "irregularity," "failure," and "battery". The "calling" mark is turned on when the entrant P has a trouble with the operation of the information processing device 100 and calls the concierge by pressing a call button or the like. The "irregularity" mark is turned on when the information processing device 100 detects an irregular operation of the entrant P, or blinks when two or more persons stand around one information processing device 100, for instance. The "failure" mark is turned on when an abnormality occurs in a hardware or the like of the information processing device 100. The "battery" mark is turned on when a remaining battery capacity of the information processing device 100 attains equal to or less than a predetermined value.

When the alert is generated in the information processing device 100, a corresponding mark in the individual alert area 322 is turned on, and an occurrence time of the alert is displayed. In the individual information area 320 of the device number "01" in FIG. 20, the alert mark of "irregularity" is turned on, and the occurrence time "10:51" of the alert is displayed. By this alert, the concierge can know a type and an occurrence time of the alert which has occurred in the information processing device 100 in charge. As the actual processing, when any of the above-described states is reached, the information processing device 100 transmits an alert signal indicating that the state to the management server 200 or directly transmits the alert signal to the tablet 300. The tablet 300 receives and displays the alert signal via the management server 200 or directly.

The process display area 323 indicates which process of the information acquisition process is conducted by the entrant P for each of the information processing devices 100. In detail, the process display area 323 includes marks for "passport", "face", "fingerprints", and "ED". The "passport" indicates the passport process, the "face" indicates the facial recognition process, the "fingerprints" indicates the fingerprint acquisition process, and the "ED" indicates the ED card process. In the display example in FIG. 20, the process display area 323 illustrates that entrants P at the device numbers "01" and "02" conduct the fingerprint collection process, an entrant P at the device number "03" conducts a facial recognition process, and entrants P at the device numbers "04" to "07" conduct the fingerprint collection process. It is noted that an alert is issued in one of the processes (processes), a corresponding mark is turned on. For instance, in each process, when the entrant P experiences two or more errors, or when the operation time of the entrant P exceeds the predetermined time, the mark of the process is turned on. In the display screen example in FIG. 20, the alert is generated in the fingerprint collection process of the entrant P at the device number "06", and the mark of "fingerprints" is turned on. By displaying the surveillance camera image and the process simultaneously, the concierge can view both the process being conducted by the entrant and the image illustrating the state, and it becomes possible for the concierge to easily confirm whether or not there is any suspicious action.

Note that the tablet 300 communicates with the information processing devices 100 to display respective images on corresponding process display areas 323, and acquires information indicating a process executed by each of the information processing devices 100. In this case, the information processing device 100 may identify the process being executed based on operation inputs of the entrant P or may analyze a behavior of the entrant P based on images from the surveillance camera 116, the facial recognition cameras 118, and the cameras 121 for hands to determine the process being executed. For instance, the information processing device 100 may determine that the fingerprint acquisition process is being executed when the entrant P places both hands on the fingerprint scanners 120.

The overall information area 330 includes marks 332 to 335 for overall alerts, a concierge ID 336, a logout button 337, an association button 338, and a handover button 339. The marks 332 to 335 in the overall alerts include a calling mark 332, an irregularity mark 333, a failure mark 334, and a battery mark 335. One or more marks 332 to 335 of the overall alerts are turned on when the alert occurs in one of the plurality of the information processing devices 100 in charge of the concierge X. For instance, the calling mark 332 is turned on when one or more information processing devices 100 of the device numbers "01" to "07" to be managed by the concierge X perform a calling process. The same applies to the irregularity mark 333, the failure mark 334, and the battery mark 335.

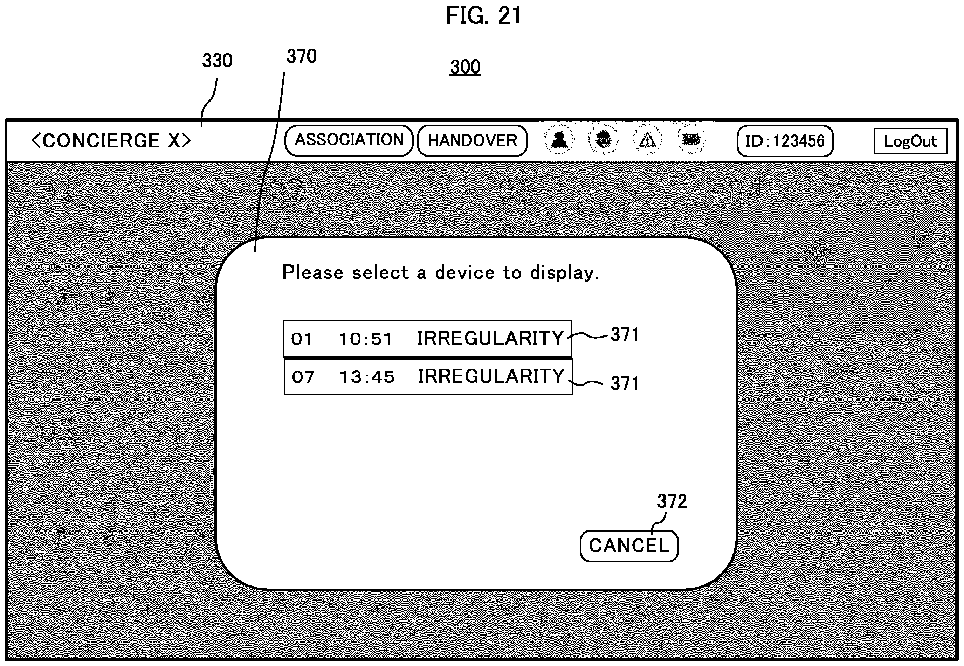

When the concierge X presses any lighted mark among the alert marks 332 to 335 of the overall alerts, an alert list 370 indicating details of that alert is displayed. FIG. 21 illustrates an example of the alert list 370 when the irregularity mark 333 is pressed. The alert list 370 displays a list of the information processing devices 100 on which an irregularity alert has occurred. In the example in FIG. 21, the alert list 370 indicates that the irregularity alert has occurred in the information processing devices 100 of the device numbers "01" and "07". When the concierge X presses a bar 371 of the displayed device number "01", a device list screen as illustrated in FIG. 20 is displayed, and the individual information area 320 of the device number "01" is temporarily turned on. Moreover, when the concierge X presses a cancel button 372, the display of the alert list 370 ends and the device list screen as illustrated in FIG. 20 is displayed.

In the above example, when any lighted mark among the marks 332 to 335 of the overall alerts is selected, the alert list concern the alert corresponding to the lighted mark is displayed. Alternatively, when any of the marks 332 to 335 is selected, an alert list containing all alerts in the four alerts occurring at that time may be displayed.

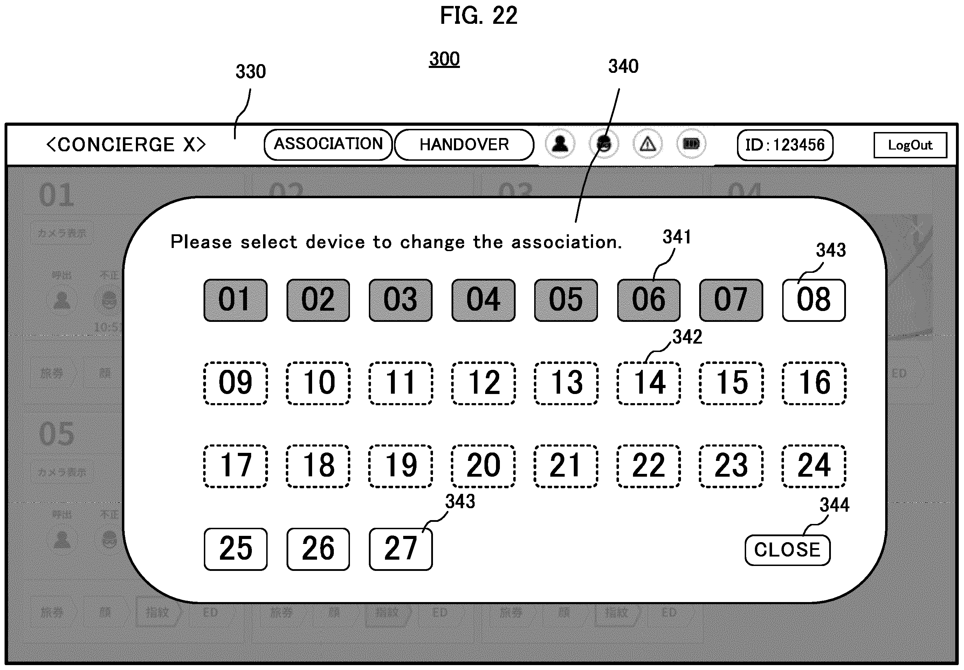

Next, the association of the information processing device will be described. The association button 338 described in FIG. 20 is a button for associating the information processing device 100 with the concierge X. When the concierge X presses the association button 338, an association window 340 described in FIG. 22 is displayed. In the association window 340, the information processing devices 100 are individually represented with device marks indicating device numbers. Among the device marks, colored device marks 341 indicate the information processing devices 100 which are associated with the concierge X that operates this tablet 300. Each device mark 342 with a dashed line indicates the information processing devices 100 which are associated with other concierges. Each device mark 343 with a solid line indicates the information processing devices 100 which are not associated with any of the concierges. In the example in FIG. 22, the device numbers "01" to "07" are associated with the concierge X, the information processing devices 100 of the device numbers "09" to "24" are associated with other concierges, and the device numbers "08" and "25" to "27" are not associated with any of the concierges.

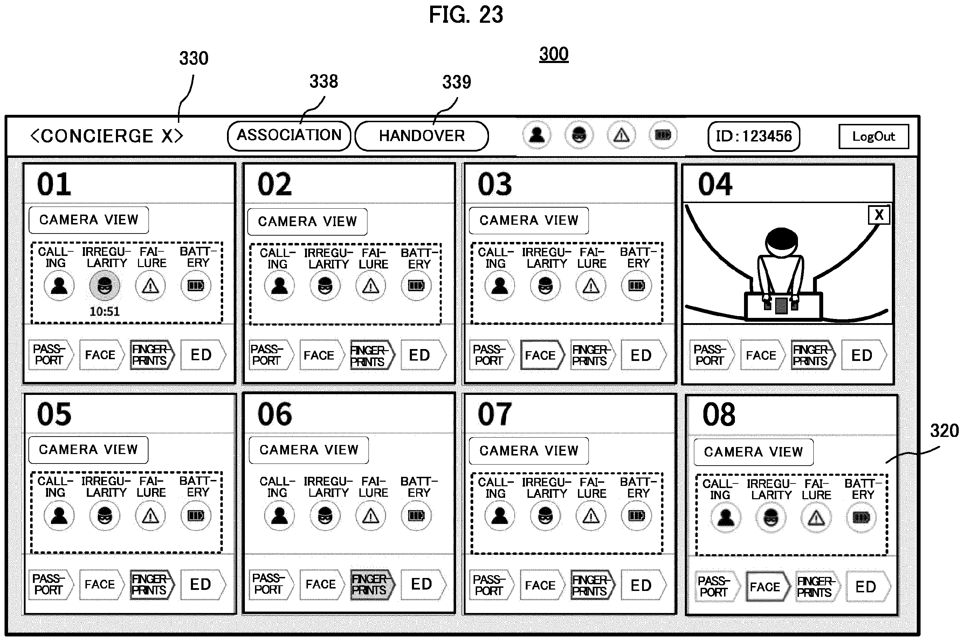

Here, when the concierge X presses a device mark 343 having the device number "08", the information processing device 100 having the device number "08" is associated with the concierge X. By pressing a close button 344, the association window 340 closes. FIG. 23 illustrates a device list screen after the information processing device 100 having the device number "08" is associated with the concierge X. As can be seen from the comparison with FIG. 20, the individual information area 320 for the information processing device of the device number "08" is added.

Next, an association release of the information processing device 100 will be described. The association release is an operation for releasing some or all of devices in charge from responsibility of the concierge. In a case of releasing the association, the concierge X presses the association button 338 to display the association window 340 illustrated in FIG. 22. Next, the concierge X may press the device mark 341 of the device number which is a subject to release the association.

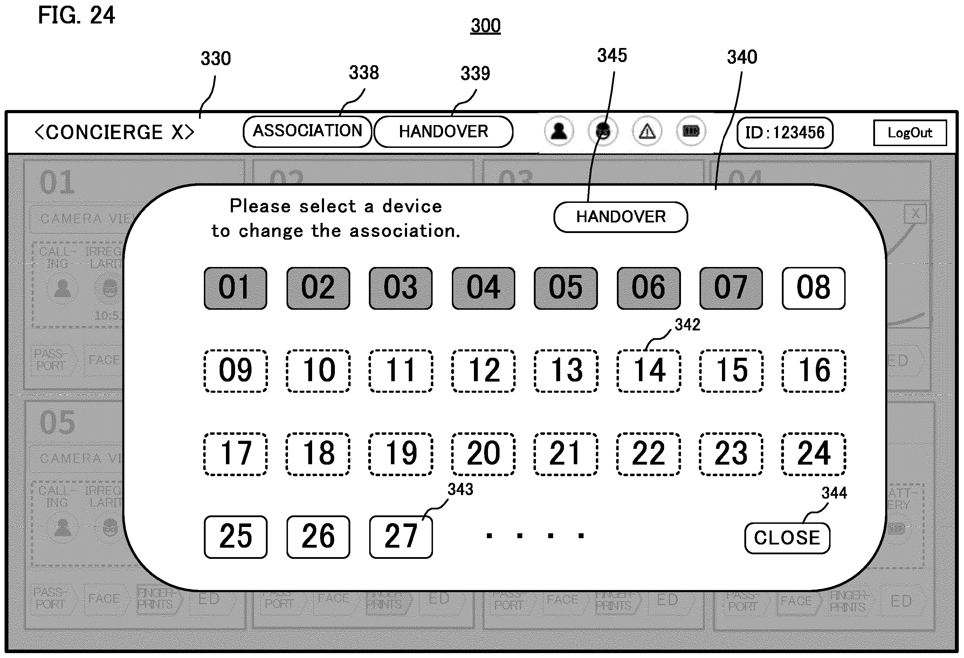

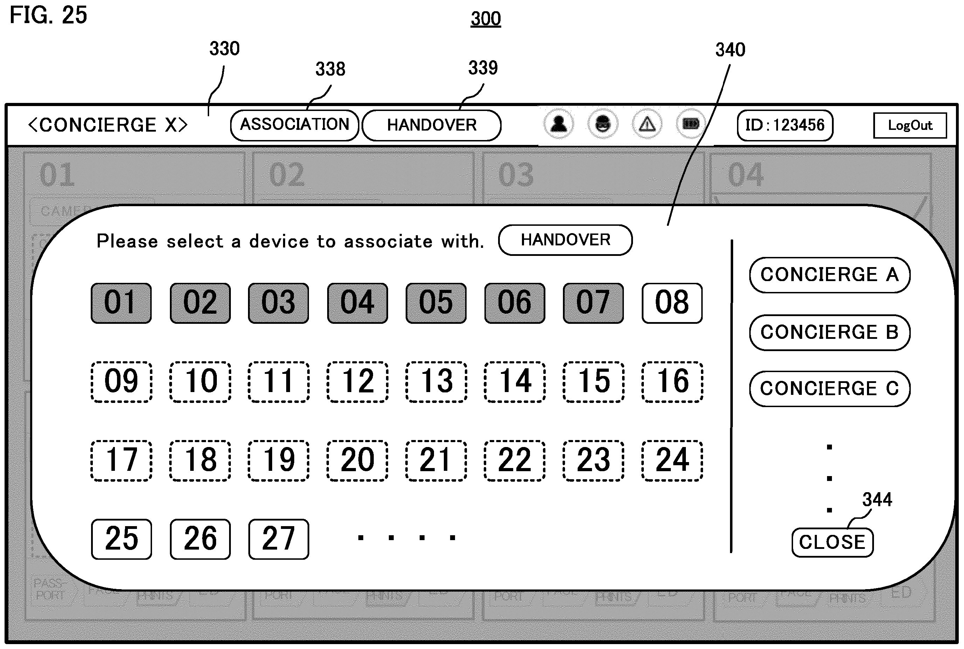

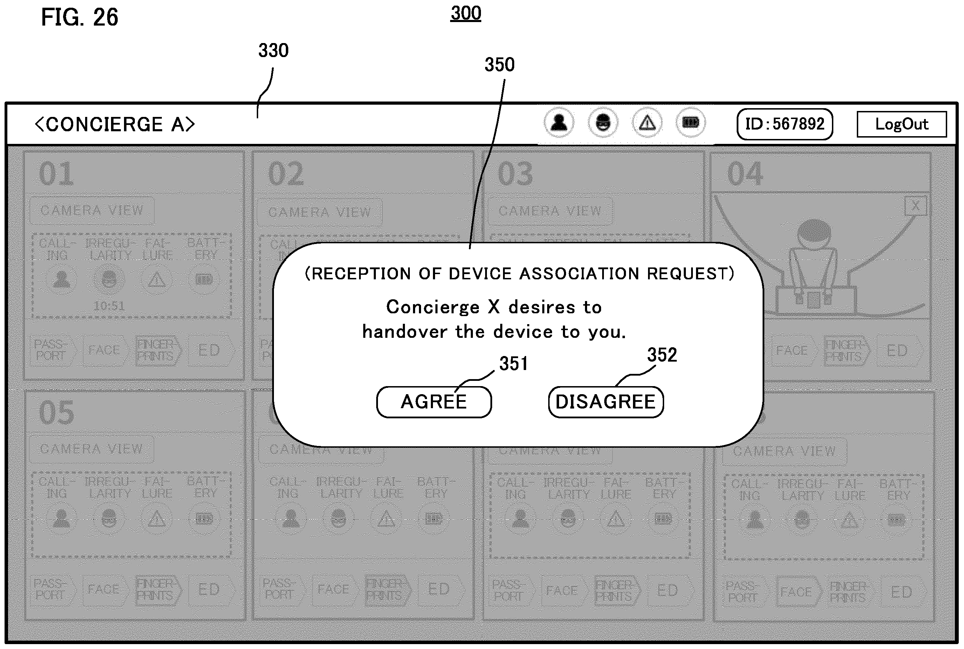

Next, a handover of the information processing device 100 will be described. The handover means handing over the device in charge of the concierge to other concierges. When the concierge X presses the handover button 339 illustrated in FIG. 20, the association window 340 illustrated in FIG. 24 is displayed. Now, when the concierge presses an association button 345, buttons 347 for designating one of the concierges of interest is displayed at a right side of the association window 340 as illustrated in FIG. 25. When the concierge X selects one button 347 of a concierge (concierge A) to be a handover destination to which the association is transferred, the tablet 300 of the concierge A as the handover destination displays a confirmation window 350 as illustrated in FIG. 26. The confirmation window 350 includes a message indicating that the handover has been requested, an agree button 351, and a disagree button 352. When the concierge A, who is to be the handover destination, presses the agree button 351, the association is performed, and the information processing device 100 in charge of the concierge X is passed to the concierge A. On the other hand, when the concierge A presses the disagree button 352, the handover is not performed.

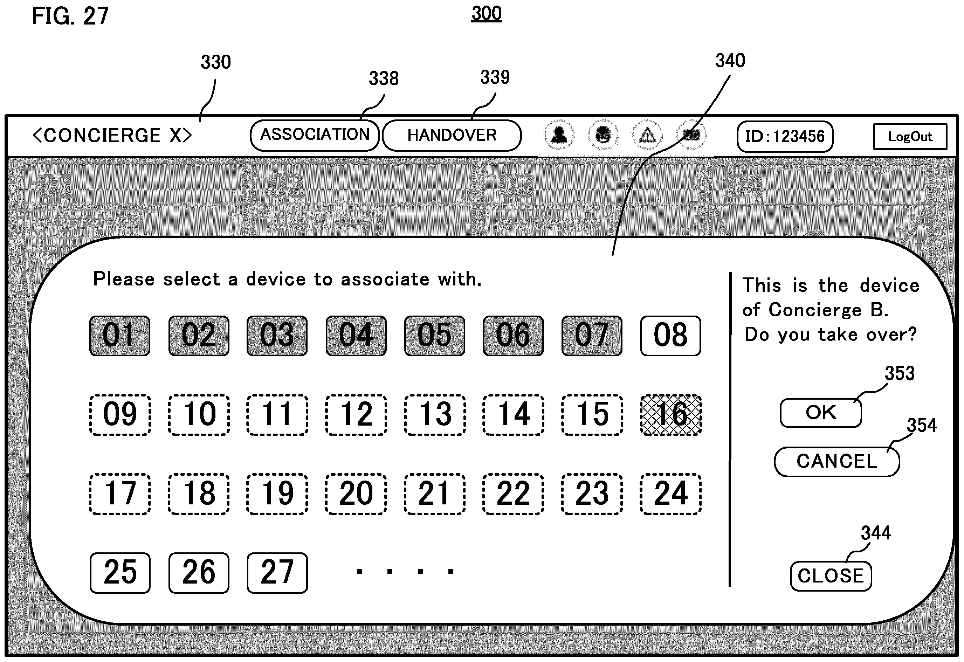

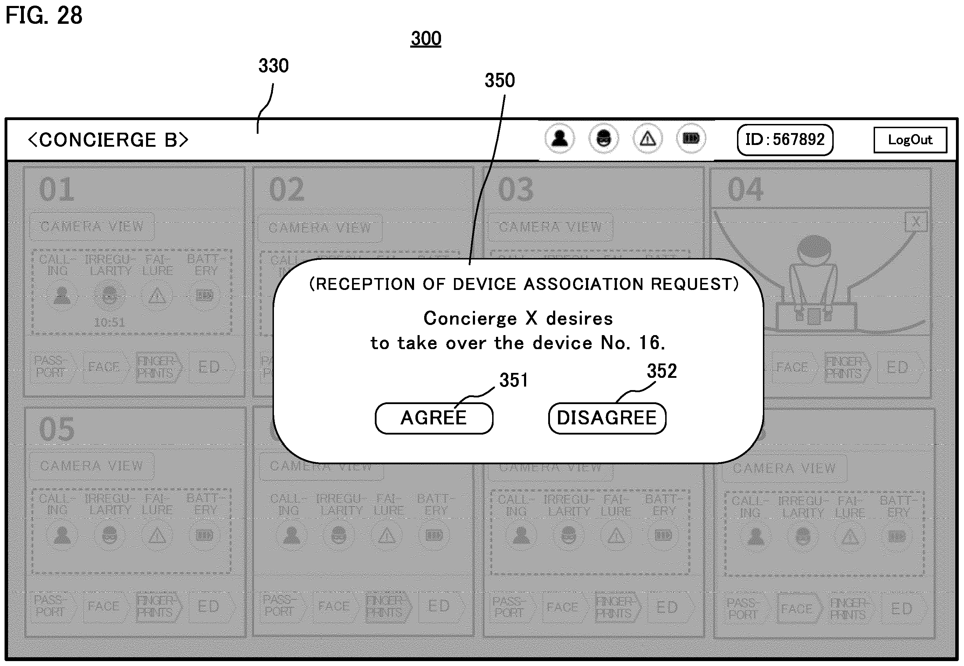

Next, a takeover of the information processing device 100. The takeover refers to change the responsibility of another concierge to be the responsibility of oneself, for that device. In a case of the takeover, when the concierge X presses the handover button 339 illustrated in FIG. 20, the association window 340 illustrated in FIG. 24 is displayed. Here, when the concierge X presses the device mark of the device number "16" which another concierge is in charge of, for instance, a message indicating that the selected information processing device 100 is in charge of another concierge (referred to as a concierge B), an OK button 353, and a cancel button 354 are displayed at the right side of the association window 340 as illustrated in FIG. 27. When the concierge X presses the OK button 353, the confirmation window 350 is displayed on the tablet 300 of the concierge B in charge of the device number 16 as illustrated in FIG. 28. The confirmation window 350 includes a message indicating that the takeover has been requested, the agree button 351, and the disagree button 352. When the concierge B presses the agree button 351, the takeover is performed and the information processing device 100 having the device number "16" in charge of the concierge B is taken over to the concierge X. On the other hand, when the concierge B presses the disagree button 352, the takeover is not performed.

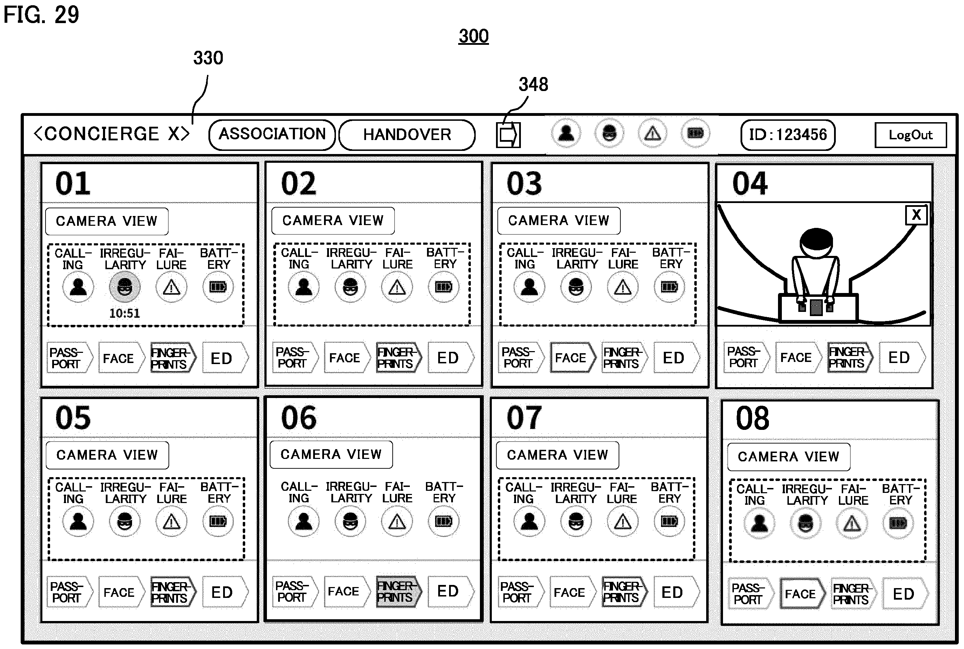

Next, a page forwarding of the device list screen will be described. In the above example, the concierge X is in charge of 8 devices or less, but in a case where one concierge is in charge of nine or more information processing devices 100, the device list screen illustrated in FIG. 20 spans a plurality of pages. In this case, the concierge can navigate among the plurality of pages by flicking the page in the device list screen. For instance, in a case where the concierge X is in charge of nine or more information processing devices, the concierge X can flick a first page of the device list screen to the left to display a second page corresponding to a ninth and subsequent devices. The concierge X can also return to the first page by flicking the second page to the right. Alternatively, instead of flicking pages, as illustrated in FIG. 29, a page move button 348 may be provided to move the page when the page move button 348 is pressed.

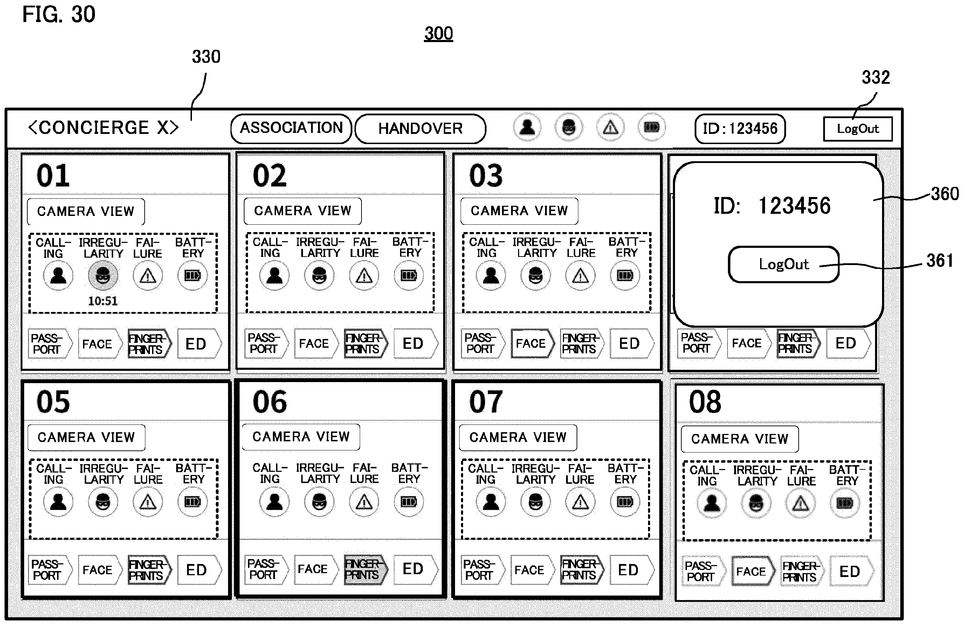

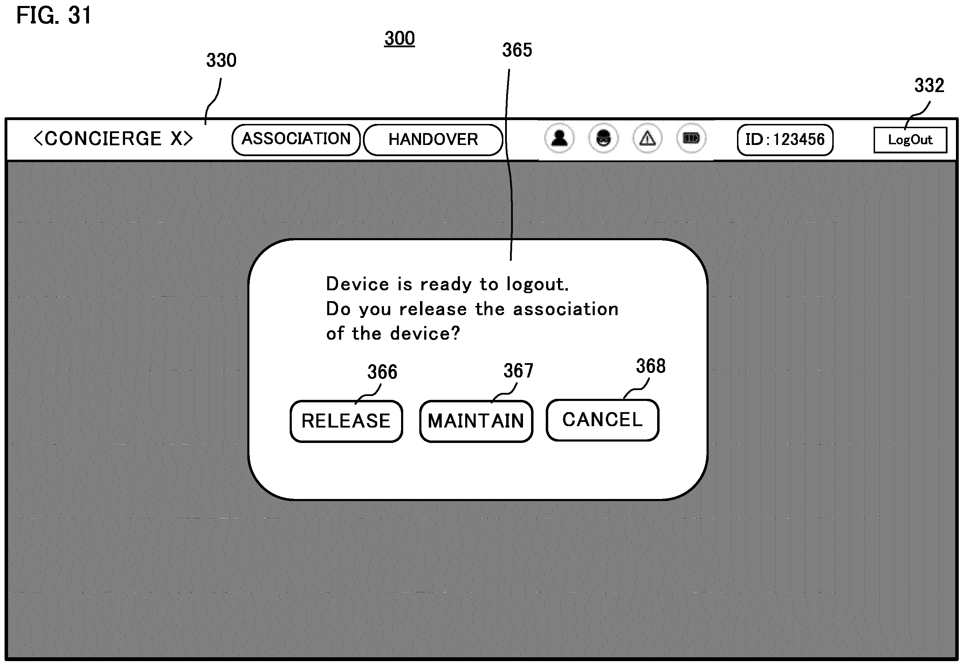

Next, a logout from the tablet will now be described. When the concierge X presses the logout button 337 illustrated in FIG. 20, a logout window 360 is displayed as illustrated in FIG. 30. When the concierge X presses a logout button 361 in the logout window 360, a confirmation window 365 illustrated in FIG. 31 is displayed. The confirmation window 365 includes a button 366 for releasing the association of a responsible device, a button 367 for retaining the association, and a button 368 for canceling the logout. When the concierge X selects the button 366, the association of each of the information processing devices 100 in charge is released, and the concierge X can log out. When the concierge X presses the button 367, the associations with the information processing devices 100 in charge are retained, and the concierge X can log out. The logout is canceled when the concierge X presses the button 368.

### <Second Example Embodiment>

Next, a second example embodiment of the present disclosure will be described.

### [Basic Concept]

A configuration of the information processing device 100 according to the second example embodiment is basically the same as that of the first example embodiment, and includes an external configuration illustrated in FIG. 2 and an internal configuration illustrated in FIG. 4. However, the information processing device 100 according to the second example embodiment differs from the first example embodiment in the facial recognition process executed in step S20 of the information acquisition process illustrated in FIG. 6.

In detail, in the first example embodiment, after the passport process is completed in the information acquisition process, the information processing device 100 captures facial images of the entrant P in the facial recognition process to perform the facial recognition. In contrast, in the second example embodiment, the information processing device 100 starts taking facial images of the entrant P when the entrant P enters a detection range of the thermal sensor 115 in front of the information processing device 100. That is, the information processing device 100 captures the facial image of the entrant P before and during the execution of the passport process. Note that in order for the entrant P to determine a use state of the information processing device 100 even from a distance, a use state (for instance, usable, unusable, or the like) of the information processing device 100 may be displayed on the touch panel 117 or a floor or the like near the information processing device 100. When a facial image suitable for the facial recognition (hereinafter, referred to as a "suitable facial image") is acquired until the passport process ends, the facial recognition process is executed using the facial image. That is, when the suitable facial image is acquired during the passport process, the process for capturing facial images of the entrant P is omitted in the facial recognition process.

Here, the "suitable facial image" means a facial image which can be used for the facial recognition. In detail, whether or not the facial image corresponds to the suitable facial image is determined by considering whether an orientation of the face in the facial image is appropriate, that is, whether all parts of the face such as eyes, a nose, and a mouth are captured, whether a resolution of the image is sufficient, whether the image is blurred, and the like.

### [Processing Flow]

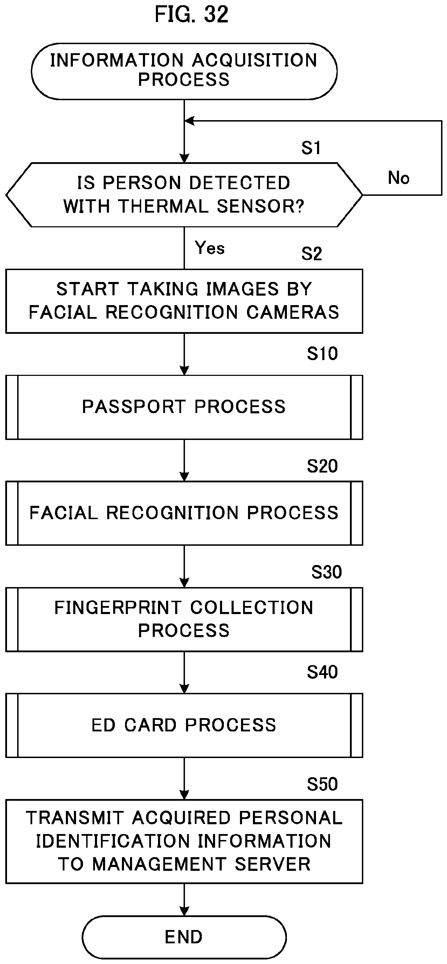

FIG. 32 is a flowchart of the information acquisition process according to the second example embodiment. This information acquisition process is realized by executing a program prepared in advance by the processor 112.

The information processing device 100 is in a sleep state when being not operated by the entrant P, and detects the front of the information processing device 100 by the thermal sensor 115 (step S1). When the entrant P stands in front of the information processing device 100, the thermal sensor 115 detects the entrant P (step S 1: Yes), and the information processing device 100 turns on the facial recognition cameras 118 to start taking images of the entrant P (step S2). Subsequently, the information processing device 100 executes the passport process (step S10). Accordingly, the facial recognition cameras 118 continue to take facial images of the entrant P from when the entrant P enters the detection range of the thermal sensor 115 until when the entrant P is in front of the information processing device 100 and completes the passport process. When the passport process is completed, the information processing device 100 executes the facial recognition process (step S20).

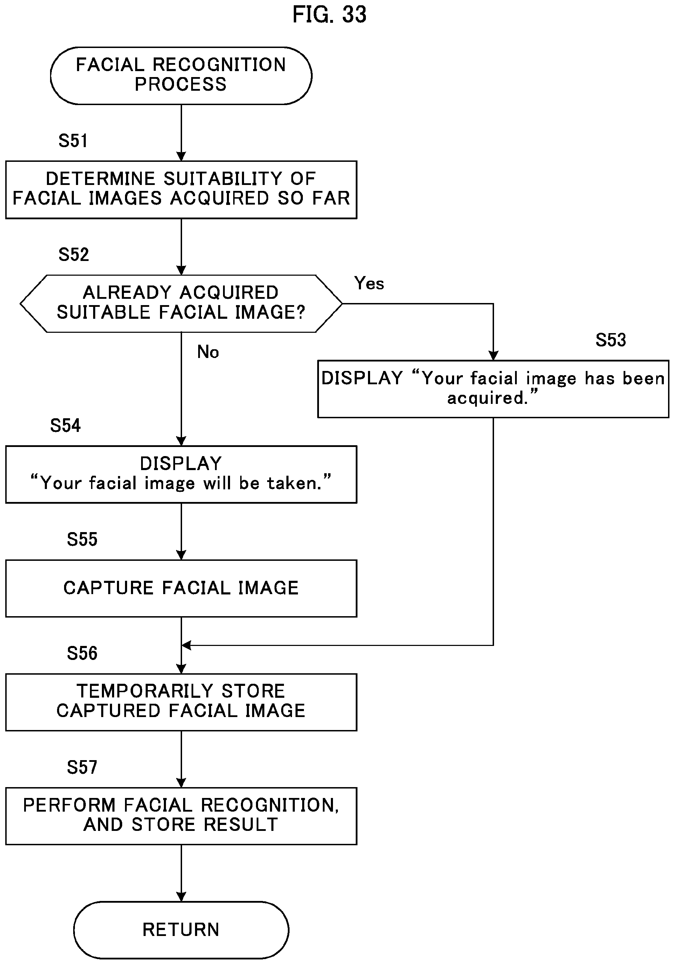

FIG. 33 is a flowchart of the facial recognition process according to the second example embodiment. First, the information processing device 100 determines whether the facial images acquired so far are suitable (step S51). In detail, the information processing device 100 analyzes the facial images of the entrant P who is captured after the facial recognition cameras 118 are turned on in step S2 and determines whether or not the facial images correspond to the aforementioned suitable facial image. When it is determined that the suitable facial image is not acquired (step S52: No), the information processing device 100 performs the facial recognition process in the same manner as in the first example embodiment. That is, the information processing device 100 displays a message such as "Your facial image will be taken." on the touch panel 117 (step S54) and takes facial images (step S55). Subsequently, the information processing device 100 temporarily stores the captured facial image in the memory 113 (step S56), performs the facial recognition using the captured facial image and the facial image included in the passport information, and stores a result of the facial recognition in the memory 113 (step S57).

On the other hand, when it is determined that the suitable facial image is acquired (step S52: Yes), the information processing device 100 displays a message such as "The facial image has been acquired." on the touch panel 117 (step S53), and advances to step S56 without taking further facial images. The information processing device 100 temporarily stores the suitable facial image acquired prior to the start of the facial recognition process in the memory 113 (step S56), and performs the facial recognition using the suitable facial image and the facial image included in the passport information, and stores a result of the facial recognition in the memory 113 (step S57). Accordingly, the facial recognition process ends and the process advances to the fingerprint collection process. Note that since processes after the fingerprint collection process are the same as those of the first example embodiment, explanations thereof will be omitted.

In the processes in FIG. 32 and FIG. 33, even in a case where the suitable facial image is acquired, the recognition process using the suitable facial image is not performed until the passport process is completed. Alternatively, in a case where the suitable facial image can be acquired, the facial recognition process using the suitable facial image may be performed in parallel with the passport process. In this case, a message such as "Your facial recognition process has been completed." may be displayed on the touch panel 117, instead of "Your facial image has been acquired". In addition, the display of messages such as "The facial image has been acquired." and "The facial recognition process has been completed." may be omitted and the fingerprint collection process advances as soon as the passport process is completed.

As described above, in the information acquisition process of the second example embodiment, the facial image of the entrant P is taken by the facial recognition cameras 118 until the entrant P ends the passport process. After that, in a case where the suitable facial image with a quality usable for facial recognition can be acquired during that time, a facial image is not taken in the facial recognition process, and the facial recognition process is performed using the suitable facial image. Accordingly, it is possible to reduce the time required for the facial recognition process. Note that the second example embodiment may be implemented in combination with the first example embodiment.

### [Modifications]

### (Modification 1)

In the second example embodiment, in step S51, the information processing device 100 determines the suitable facial image based on whether the orientation of the face in the facial image is suitable or whether the resolution of the image is sufficient. Instead, the information processing device 100 actually performs facial recognition process using facial images acquired until the end of the passport process and the facial image included in the passport information acquired by the passport process, and when the acquired verification score (matching score) is equal to or more than a predetermined value, the facial image may be determined to be the suitable facial image.

### (Modification 2)

In the second example embodiment, the facial images of the entrant P are captured by the facial recognition cameras 118 even while the passport process is being performed, but the facial image is captured without the entrant P being aware of this operation. Therefore, it is preferable that the information processing device 100 informs the entrant P that the facial images are being taken when the taking of the facial images of the entrant P is started in step S2 in FIG. 32. For instance, the information processing device 100 may display a message such as "Taking facial images" on the touch panel 117 or an mark representing that the facial images are being taken by the camera. By such a message, it is possible to inform the entrant P that the taking of the facial images is in progress. When the entrant P knows that the facial images are being taken, it is considered to cooperate with the taking of the facial images by directing the face to the touch panel 117 and so on, so that a possibility that the suitable facial image can be acquired in parallel with the passport process becomes high, and the efficiency improvement of the information acquisition processing can be expected. Also, in a case of informing the entrant P that the taking of the facial images is in progress, the entrant P may be notified to that effect at a timing when the suitable facial image is acquired. For instance, the information processing device 100 may display a message such as "facial image OK" or an mark on the touch panel 117 at a timing when the suitable facial image can be acquired.

### <Third Example Embodiment>

Next, a third example embodiment of this disclosure will be described.

### [Basic Concept]

A configuration of the information processing device 100 according to the third example embodiment is basically the same as that of the first example embodiment, and includes the external configuration depicted in FIG. 2 and the internal configuration depicted in FIG. 4. However, in the information processing device 100 according to the second example embodiment, a fingerprint acquisition process is different from the fingerprint acquisition process performed in step S30 of the information acquisition process illustrated in FIG. 6 in the first example embodiment.

In the third embodiment, when the fingerprints of the entrant P are collected, the information processing device 100 uses the captured image of the camera to determine whether or not the entrant P correctly collects the fingerprints of the index fingers of both hands. In a case of acquiring personal identification information at a time of the passport control, it is decided to collect the fingerprints of the left index finger and the right index finger of the entrant P. In the passport control in which fingerprints collected by the information processing device 100 are checked with a watchlist, in a case where the fingerprints of the entrant P are on the watchlist, the entrant P is denied entry into the country.

For this reason, the entrant P, who is concerned about being on the watchlist, may try to provide fingerprints of fingers other than the index fingers in the fingerprint collection process. Therefore, in the third embodiment, the information processing device 100 determines whether the entrant P is providing the fingerprints of the index fingers correctly, by using the captured image by the camera.

Specifically, in the fingerprint acquisition process, when the entrant P places the fingers on the fingerprint scanner 120, the information processing device 100 captures images of areas at hand of the entrant P, that is, including areas of the fingerprint scanners 120 and the hands of the entrant, by the cameras 121 for hands. Accordingly, the information processing device 100 determines whether or not the entrant P correctly places the index fingers on the fingerprint scanners 120 based on the captured image, and issues an alert when fingers other than the index fingers are placed on the fingerprint scanners 120.

### [Configuration]

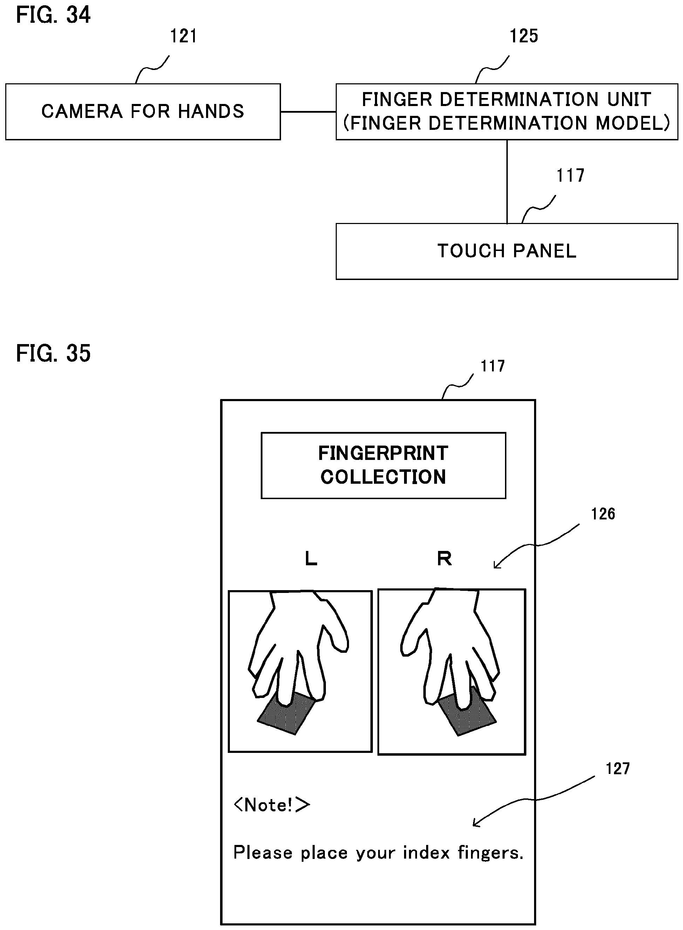

FIG. 34 illustrates a configuration for determining whether or not the entrant P has correctly placed his or her index fingers on the fingerprint scanners 120 (hereinafter also referred to as a "finger determination"). The finger determination is mainly performed by the cameras 121 for hands, a finger determination unit 125, and the touch panel 117. The finger determination unit 125 is actually implemented by the processor 112.

The cameras 121 for hands capture respective images for an area of the table 135 of the information processing device 100, that is, images (hereinafter, referred to as "hand images") including the passport reader 119 and the fingerprint scanners 120, and outputs the captured image to the finger determination unit 125. The finger determination unit 125 determines whether or not the entrant P correctly places the index fingers on the fingerprint scanners 120 based on the hand images. In a preferred example, the finger determination unit 125 determines by using a finger determination model that is learned using machine learning, a neural network, or the like. The finger determination model is learned to detect the index fingers from the image of the hands of the entrant P, and the finger determination unit 125 determines whether the detected index fingers are positioned on the fingerprint scanners 120. The finger determination unit 125 displays the alert on the touch panel 117 based on the determination result.

FIG. 35 illustrates an example of the alert displayed on the touch panel 117 when the finger determination unit 125 determines that the entrant P does not place the index fingers on the fingerprint scanners 120. In this example, hand images 126 captured by the cameras 121 for hands are displayed in a center of the touch panel 117. The hand images 126 correspond to images acquired by capturing the actual hands of the entrant P and are captured by the right and left cameras 121R and 121L for hands. In this example, the entrant P places middle fingers on the fingerprint scanner 120, instead of the index fingers. In addition to the hand images 126, a message 127 is displayed urging to place the index fingers on the fingerprint scanners 120. As described above, by displaying the alert, it is possible to clearly inform the entrant P that a fingerprint providing method by the entrant P is incorrect and that the fingerprint providing method by the entrant P is correct.

### [Processing Flow]

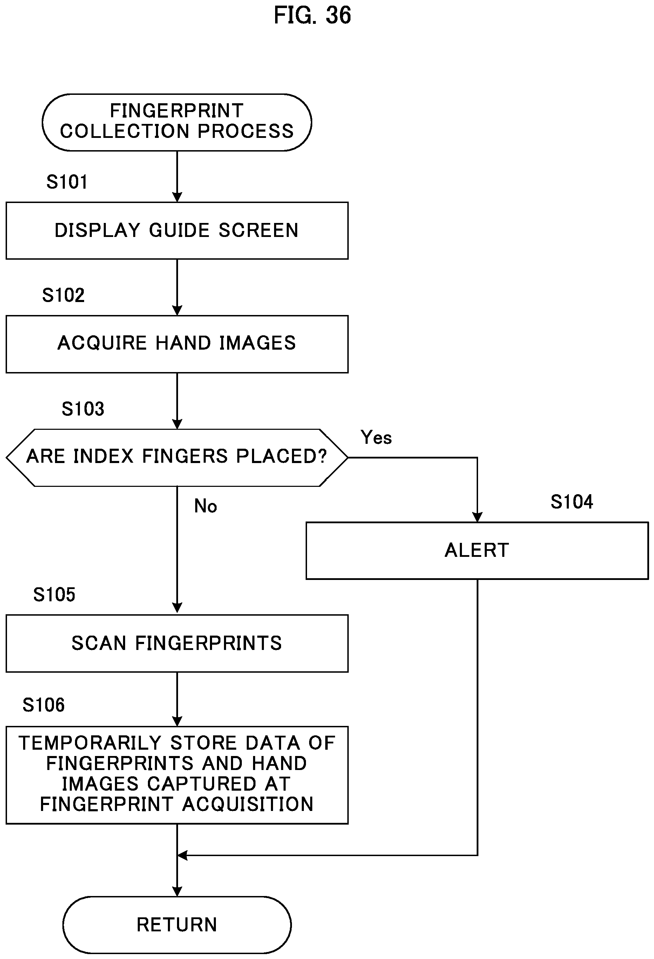

FIG. 36 is a flowchart illustrating a fingerprint collection process according to the third embodiment. This process is executed as step S30 in the information acquisition process illustrated in FIG. 6. First, as illustrated in FIG. 14A, the information processing device 100 displays a guide screen for collecting fingerprints on the touch panel 117 (step S101). Next, the cameras 121 for hands acquire the hand images of the entrant P (step S102). Next, the finger determination unit 125 determines whether or not the entrant P correctly places the index fingers on the fingerprint scanners 120 based on the hand images (step S103).

When the entrant P has no index finger on the fingerprint scanners 120 (step S103: No), the information processing device 100 displays an alert on the touch panel 117 as illustrated in FIG. 35 (step S104). On the other hand, when the entrant P places the index fingers on the fingerprint scanners 120 (step S103: Yes), the fingerprint scanners 120 read the fingerprints of the left index finger and the right index finger of the entrant P (step S105), and temporarily stores the read fingerprints and the hand images acquired in step S102 in the memory 113 (step S106). Accordingly, the process returns to the main routine in FIG. 6. Data of the fingerprints temporarily stored in step S106 and the hand images are transmitted to the management server 200 in step S50 in FIG. 6. Therefore, the immigration officer at a screening gate can view the hand images at a time of a fingerprint acquisition, if necessary, when this entrant P comes to the screening gate.

In the above-described process, the fingerprint scanners 120 correspond to an example of a fingerprint scanning device, the cameras 121 for hands correspond to an example of an image acquisition means, the finger determination unit 125 corresponds to an example of a finger determination means, the processor 112 corresponds to an example of a fingerprint acquisition means, and the touch panel 117 corresponds to an example of an alert means.

As described above, according to the third embodiment, when the entrant P does not correctly place the index fingers in the fingerprint scanners 120, the information processing device 100 may detect it and issue an alert. The third example embodiment can be implemented in combination with one of or both the first example embodiment and the second example embodiment.

### [Modifications]

### (Modification 1)

In the above example, the finger determination unit 125 is trained to detect the index fingers of a user from the hand images; however, instead, it may be trained to distinguish and detect all fingers of the hands of the user. That is, the finger determination unit 125 may be trained so as to be able to detect which finger (a thumb, an index finger, a middle finger, a ring finger, or a little finger) is for each of the fingers in the image. In that case, in an alert display illustrated in FIG. 35, a message may be displayed such as "You place the middle fingers on the fingerprint scanners. Please place the index fingers instead of the middle fingers". At that time, the index fingers in the images of the hands may be highlighted (for instance, filled in yellow, surrounded by a white frame line, or the like).

### (Modification 2)

The entrant P, who is concerned about being on the watchlist, may try to switch the left index finger and the right index finger, and provide fingerprints. In other words, it is attempted to provide fingerprints by placing the right index finger on the fingerprint scanner 120L for the left hand and placing the left index finger on the fingerprint scanner 120R for the right hand. In this case, a right arm and a left arm of the entrant P cross each other. Therefore, the finger determination unit 125 determines whether or not the arms of the entrant P are crossed based on the captured images of the cameras 121 for hands. The information processing device 100 may display an alert such as "the right hand and the left hand are reversed" on the touch panel 117 when it is determined that the arms of the entrant P are crossed based on the captured images of the cameras 121 for hands.

The captured images of the surveillance camera 116 and/or the facial recognition camera 118 may be used to detect that the right arm and the left arm are crossed. As illustrated in FIG. 2, since the surveillance camera 116 is provided near an upper end of the information processing device 100 and the facial recognition camera 118 is also provided above the table 135 where the fingerprint scanners 120 are provided, it is possible to determine whether or not the arms of the entrant P are crossed based on the captured images of the surveillance camera 116 or the facial recognition camera 118.

### <Fourth Example Embodiment>

Next, a fourth example embodiment of the present disclosure will be described.

### [Basic Concept]

A configuration of the information processing device 100 according to the fourth example embodiment is basically the same as that of the first example embodiment, and includes an appearance configuration illustrated in FIG. 2 and a functional configuration illustrated in FIG. 4. Although briefly described above with reference to FIG. 14B, in the fingerprint acquisition process, the information processing device 100 according to the fourth example embodiment displays, on the touch panel 117, a guide image on which a guide hand for guiding the correct placement of fingers with respect to the fingerprint scanners 120 is displayed.

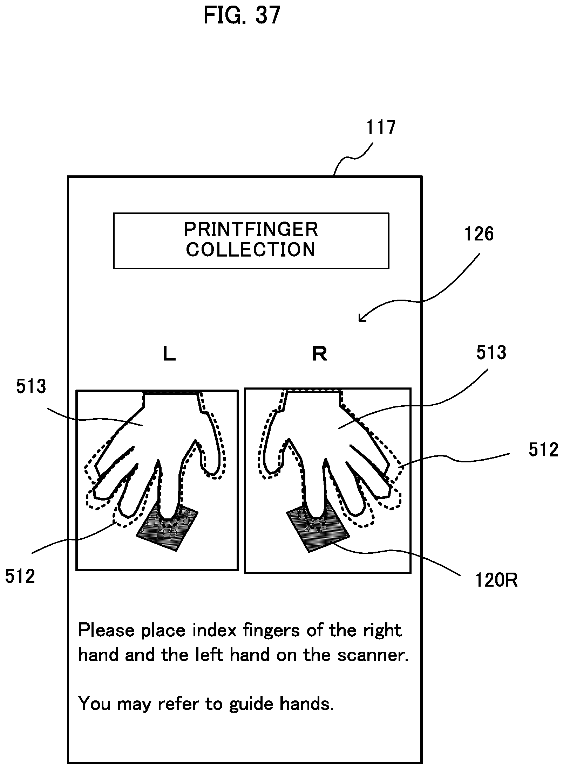

FIG. 37 illustrates an example of the guide image displaying the guide hand. The information processing device 100 first displays the hand images 126 of the entrant P captured by the cameras 121 for hands on the touch panel 117. Since the hand images 126 display the captured images of the cameras 121 for hands in real time, when the hands 513 of the entrant P moves, the hand images 126 also changes. Furthermore, the information processing device 100 displays the guide hands 512 indicating the correct placement of the hands at a time of the fingerprint acquisition on the touch panel 117. The guide hands 512 represent lines indicating contours of the right hand and the left hand, and are superimposed and displayed respectively on the hand images 126. Incidentally, each size of the guide hands 512 corresponds to a size of a general adult hand. The guide hands 512 indicate respective positions of the right hand and the left hand in a case where the right index finger and the left index finger are correctly placed with respect to the fingerprint scanners 120 at the right side and the left side, respectively, and display positions are fixed. Therefore, the entrant P may move the hands in order for positions of hands 513 of the entrant P represented by the hand images 126 to correspond to the correct placements indicated by the guide hands 512. Incidentally, in the guide hands 512, by displaying only each portion of the index fingers in color, or by changing a thickness and a type of the line, the index fingers are distinguishably displayed from other fingers. The touch panel 117 corresponds to an example of a display section, and the processor 112 corresponds to an example of a display control means.

According to the fourth example embodiment, by displaying the guide hands 512, the entrant P can easily place the hands and the fingers in the correct positions, and a time required for the fingerprint collection process can be shortened. The fourth example embodiment can be implemented in combination with one or more of the first example embodiment to third second example embodiment.

### [Modifications]

### (Modification 1)

In a case where the entrant P is a child, the information processing device 100 may display the guide hands 512 corresponding to a size of hands of a child. The information processing device 100 may determine whether the entrant P is an adult or a child based on the passport information or the facial image.

### (Modification 2)

As illustrated in FIG. 37, a guide image including the guide hands 512 may be transmitted to and displayed on the tablet 300 of the concierge. In detail, the information processing device 100 transmits a generated guide image to the tablet 300 via the management server 2 or directly. In the display image illustrated in FIG. 20, the tablet 300 displays the guide images as illustrated in FIG. 37 in place of the surveillance camera image 324 or in addition to the monitoring camera image 324 when the entrant P is taking the fingerprints. By the guide images, it is possible for the concierge to confirm whether the entrant P operating the information processing device 100 in charge correctly performs the fingerprint acquisition. In addition, for the entrant P who does not place the hands in the correct positions even though the guide image including the guide hands 512 is displayed, it is possible for the concierge to go to the information processing device 100 and directly assist operations for the entrant P who does not place the hands in the correct positions.

In addition, the information processing device 100 may transmit a guide image (movie) including the guide hands, which has been taken until the entrant P completes the collection of the fingerprints, to the PC 5 of the immigration officer through the management server 200. Accordingly, it is possible for the immigration officer to view in what state the entrant P who came to the screening gate has collected the fingerprints.

### <Fifth Example Embodiment>

Next, a fifth example embodiment of this disclosure will be described.

### [Basic Concept]

A configuration of the information processing device 100 according to the fifth example embodiment is basically the same as that of the first example embodiment, and includes the appearance configuration illustrated in FIG. 2 and the functional configuration illustrated in FIG. 4. However, the information processing device 100 according to the fifth example embodiment includes a function of preventing forgetting to place a passport.

In the information processing device 100, the entrant P performs the passport process, the facial recognition process, the fingerprint collection process, and the ED card process in this order, but after all these processes are completed, the entrant P may forget to place the passport on the passport reader 119. Therefore, in the fifth example embodiment, an alert is displayed on the touch panel 117 urging the entrant P to have the passport at some timings.

### [Processing Flow]

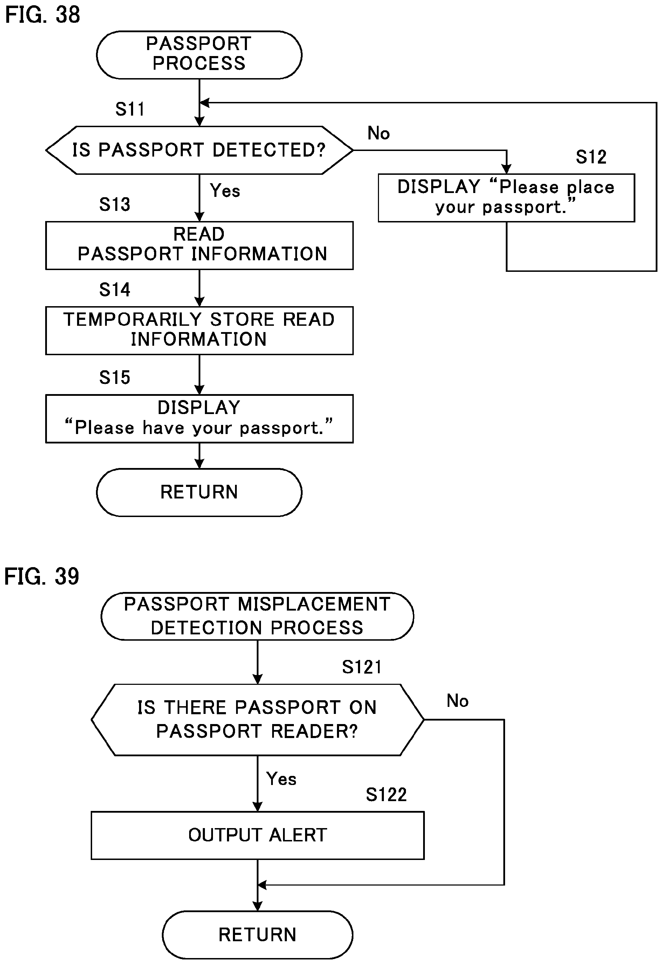

FIG. 38 illustrates a flowchart of the passport process according to the fifth example embodiment. This process is performed in step S10 of the information acquisition process illustrated in FIG. 6. As can be understood from FIG. 7, steps S11 to S14 of the passport process according to the fifth example embodiment is similar to those of the passport process illustrated in FIG. 7. When the passport information read by the passport reader 119 in step S14 is temporarily stored in the memory 113, the information processing device 100 displays an alert such as "Have your passport" on the touch panel 1117 (step S15). The information processing device 100 may output a voice message, a warning sound, or the like in addition to the display on the touch panel 117. This prompts the entrant P to have the passport with the entrant P immediately after the passport process is completed. After that, the passport process is terminated.

In addition to the completion of the passport process described above, the information processing device 100 performs a passport misplacement detection process at respective timings after the completion of the facial recognition process illustrated in FIG. 6, the completion of the fingerprint collection process, and the completion of the ED card process. FIG. 39 is a flowchart of the passport misplacement detection process.

First, the information processing device 100 determines whether or not the passport is left on the passport reader 119 (step S121). For instance, the information processing device 100 reads the passport by the passport reader 119 to detect whether or not the passport is left. Instead of or in addition to the detection by the passport reader 119, it may be detected that the passport is left, for instance, an image analysis of the captured images of the cameras 121 for hands.

When there is the passport on the passport reader (step S121: Yes), the information processing unit 100 outputs the alert (step S122). As described above, the alert is carried out by the message display on the touch panel 117 or the output of the voice message or the warning sound. On the other hand, when there is no passport on the passport reader (step S121: No), the information processing unit 100 does not output the alert. After that, the passport misplacement detection process is terminated.

In the above-described process, the passport reader 119 corresponds to an example of a passport reading device, the processor 112 corresponds to an example of a passport information acquisition means, and the facial recognition camera 118 and the processor 112 correspond to an example of a facial recognition means.

As described above, in the fifth example embodiment, in a case where the entrant P leaves the passport until the end, the information processing device 100 outputs the alert at each time when the passport process is completed, when the facial recognition process is completed, when the fingerprint collection process is completed, and when the ED card process is completed. In this manner, by repeatedly informing the entrant P that the passport has been left behind during the information acquisition process, it is possible to reduce the number of passports left behind. The fifth example embodiment can be implemented in one of or in combination with two or more of the first example embodiment to fourth example embodiment.

### <Sixth Example Embodiment>

Next, a sixth example embodiment of the present disclosure will be described.

### [Basic Concept]

A configuration of the information processing device 100 according to the sixth example embodiment is basically the same as that of the first example embodiment, and includes the appearance configuration illustrated in FIG. 2 and the functional configuration illustrated in FIG. 4. However, the information processing device 100 according to the sixth example embodiment has a function for guiding the correct destination to the entrant P who has come to a location of the information processing device 100 by mistake.

Persons, who need to provide personal identification information using the information processing device 100 at the time of immigration, are often foreign nationals. A user other than a foreign person basically does not need to operate the information processing device 100 and may advance to a facial recognition gate dedicated to Japanese. Moreover, even in a case of a foreign person, the person who has been pre-registered does not need to operate the information processing device 100 and may advance to an automation gate. Therefore, in the fifth example embodiment, in a case where a Japanese person erroneously operates the information processing device 100, the information processing device 100 displays information on the touch panel 117 to guide the Japanese person to advance to the facial recognition gate dedicated to the Japanese. In addition, when the foreign person who has performed the pre-registration operates the information processing device 100, the information processing device 100 displays information on the touch panel 117 to guide the person to advance to the automation gate.

### [Process Flow]

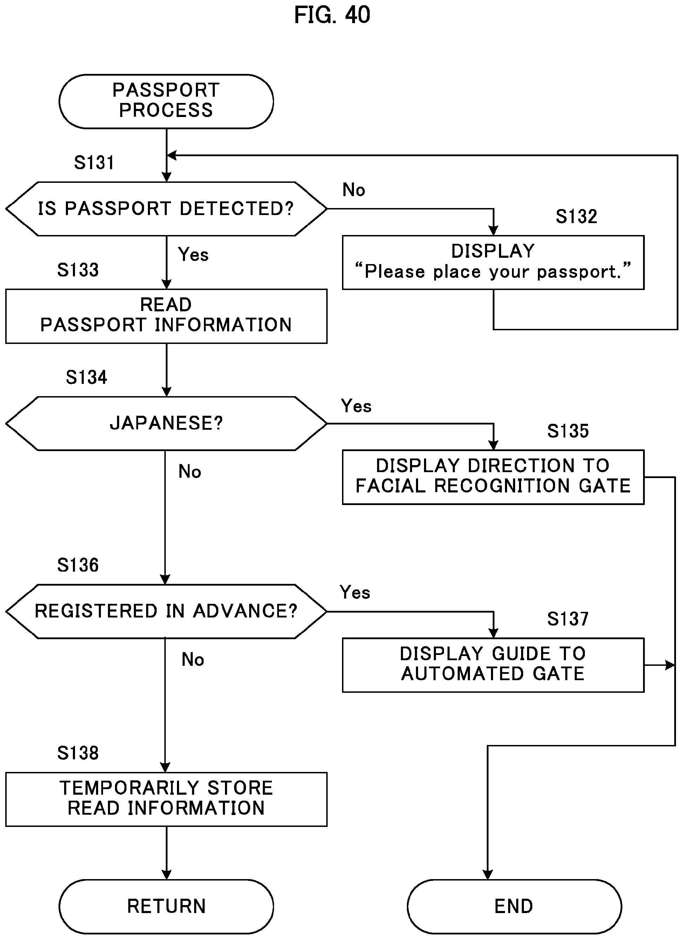

FIG. 40 is a flowchart of the passport process according to the sixth example embodiment. This passport process is executed in step S 10 of the information acquisition process illustrated in FIG. 6. First, the information processing device 100 detects the passport by the passport reader 119 (step S131). When the passport cannot be detected (step S131: No), the information processing device 100 displays a message such as "Place your passport." on the touch panel 117 (step S132). On the other hand, when the passport is detected (step S131: Yes), the passport reader 119 reads the passport information from an IC chip in the passport (step S133).

Next, the information processing device 100 determines whether or not the entrant P is Japanese based on the nationality indicated in the read passport information (step S134). When the entrant P is Japanese (step S134: Yes), the information processing device 100 displays the guide to the facial recognition gate on the touch panel 117 (step S135). For instance, the information processing device 100 displays a message such as " If Japanese, please proceed to the facial recognition gate." on the touch panel 117. After that, this passport process is terminated. Note that in addition to displaying the message, an audio message may be output.

On the other hand, when the entrant P is not Japanese (step S134: No), the information processing device 100 determines whether or not the entrant P has been pre-registered for using the automation gate (step S136). Each foreigner using the automation gate has been pre-registered, and information indicating that the foreigner has been pre-registered is recorded in the passport. Therefore, the information processing device 100 determines whether or not the entrant P is pre-registered depending on whether or not the information indicating that the entrant P has been pre-registered is included in the passport information. Instead of recording the pre-registered information in the passport, the information indicating that the pre-registered information and the personal identification information of the entrant P acquired from the passport may be stored in association with another DB or the like, and it may be determined whether or not the DB has been accessed to register the personal identification information.

When the entrant P has been pre-registered (step S136: Yes), the information processing device 100 displays the guide to the automation gate on the touch panel 117 (step S137). For instance, the information processing device 100 displays a message such as "Since the pre-registration has been already conducted, please proceed to the automation gate." on the touch panel 117. Also, an audio message may be output. Note that this message is basically English because this message is for foreign persons. Alternatively, the information processing device 100 may detect the nationality of the entrant P based on the passport information of the entrant P, and may display the message in an official language of the country.

On the other hand, when the entrant P is not pre-registered (step S137: No), the entrant P needs to provide the personal identification information using the information processing device 100. Therefore, the information processing device 110 temporarily stores the read passport information in the memory 113 (step S38). After that, the process returns to the main routine in FIG. 6. In the above process, the touch panel 117 corresponds to an example of a display section, and the processor 112 corresponds to an example of a destination guide means.

As described above, according to the sixth example embodiment, in a case where the entrant P who does not need to operate the information processing device 100, more specifically, a Japanese person or a foreigner who has already pre-registered the automation gate mistakenly operates the information processing device 100, the information processing device 100 guides the entrant P to the correct destination. Therefore, it is possible to guide the entrant P who erroneously came to the information processing device 100 can be guided to the correct destination. The sixth example embodiment can be implemented by one of or in combination with two or more of the first example embodiment to the fifth example embodiment.

### [Modifications]

### (Modification 1)

In the above-described example, in step S134 of the passport process illustrated in FIG. 40, the information processing device 100 determines whether or not the entrant P is Japanese based on the passport information; however, in a case where it is possible to determine whether or not the entrant P is Japanese by the facial recognition process, it may be determined whether or not the entrant P is Japanese by using the facial recognition process.

### (Modification 2)

In step S136 of the passport process illustrated in FIG. 40, in a case where it is determined that the entrant P has not been pre-registered (step S136), the information processing device 100 may recommend the entrant P to conduct the pre-registration so that the automation gate can be used in a next time and subsequent times. In detail, the information processing device 100 displays a button for designating whether or not to perform the pre-registration on the touch panel 117, and when the entrant P designates to perform the pre-registration, the pre-registration process may be performed. In a case where the information processing device 100 has a function of the pre-registration, the pre-registration can be performed on the spot. On the other hand, in a case where the information processing device 100 does not have the function of the pre-registration, the information processing device 100 may display guide information such as a place of a pre-registration terminal on the touch panel 117.

### <Seventh Example Embodiment>

Next, a seventh example embodiment of the present disclosure will be described.

### [Basic Concept]

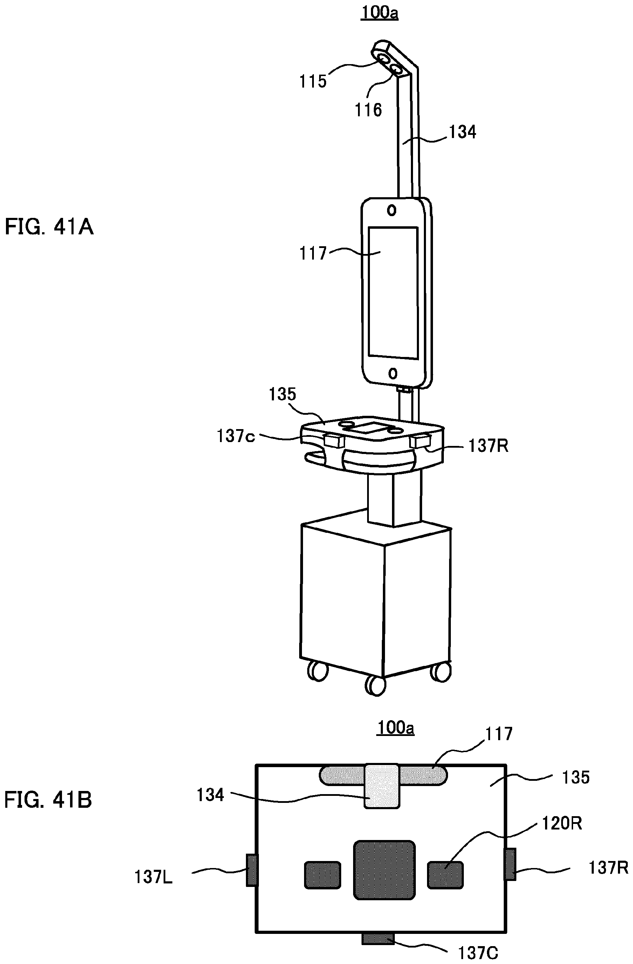

An information processing device 100a according to the seventh example embodiment includes a projector that projects information near a foot of the information processing device 100, in addition to the configuration of the first example embodiment. FIG. 41A is a perspective view illustrating an external configuration of the information processing device according to the seventh example embodiment, and FIG. 41B is a plan view illustrating the information processing device according to the seventh example embodiment as viewed from above.

As illustrated, the information processing device 100a according to the seventh example embodiment includes projectors 137R, 137C, and 137L provided on the side surface of the table 135 in addition to the configuration of the first example embodiment. The projector 137R is provided on the right side of the table 135 to project information onto a floor at a right side of the information processing device 100a. The projector 137R is provided in the center of the table 135 and projects information on the floor in front of the information processing device 100a. The projector 137L is provided on a left side of the table 135 and projects information onto the floor at the left side of the information processing device 100a.

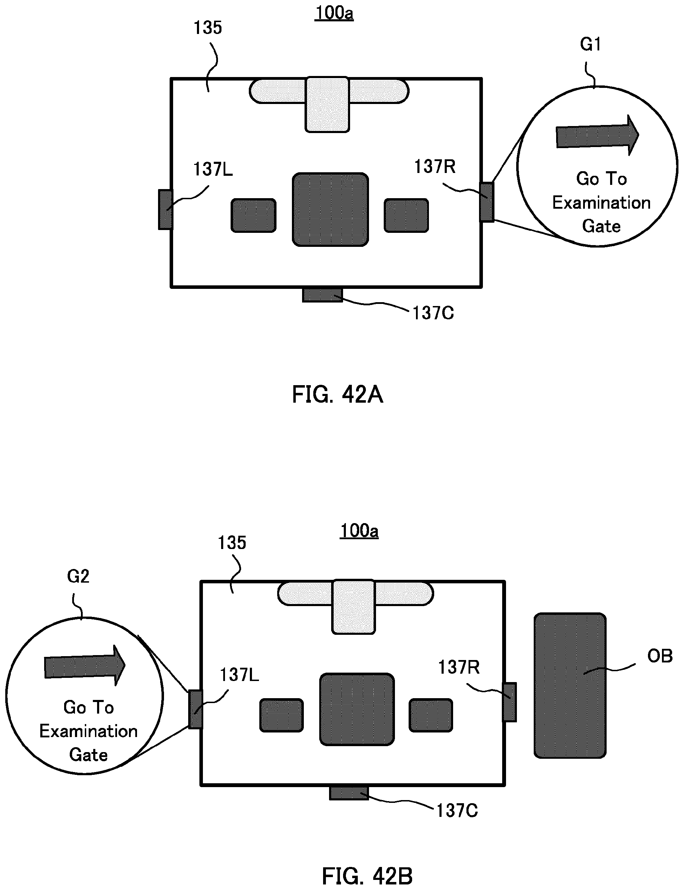

The projectors 137R and 137L project information indicating the following destination to the entrant P who has finished operating the information processing device 100a. FIG. 42A and FIG. 42B illustrate examples in which the projectors project information. Incidentally, FIG. 42A and 42B is a view of the information processing device 100a from above. In an example embodiment in FIG. 42A, the information processing device 100a projects guide information G1 on the floor at the right side of the information processing device 100a by the projector 137R. The guide information G1 guides the entrant P to the screening gate located to the right side of the information processing device 100a. The information processing device 100a may detect the nationality of the entrant P based on the passport information of the entrant P, and may project the guide information G1 in an official language of the country of the entrant P.

In an example in FIG. 42B, as in the example in FIG. 42A, the entrant P needs to be guided to the screening gate at the right side of the information processing device 100a, but there is an object OB such as baggage of the entrant P that exists on the right side of the information processing device 100a. In this case, the information processing device 100a detects that there is the object OB on the right side of the information processing device 100a by the surveillance camera 116 and projects guide information G2 on the floor at the left side of the information processing device 100a using the left projector 137L. Similar to the guide information G1, the guide information G2 guides the entrant P to the screening gate located at the right side of the information processing device 100a. Incidentally, a proximity sensor may be provided on sides of the information processing device 100a to detect whether there is the object OB at a position where the projector 137R or 137L projects the information. Furthermore, whether there is an object may be detected using the image of the thermal camera 115.

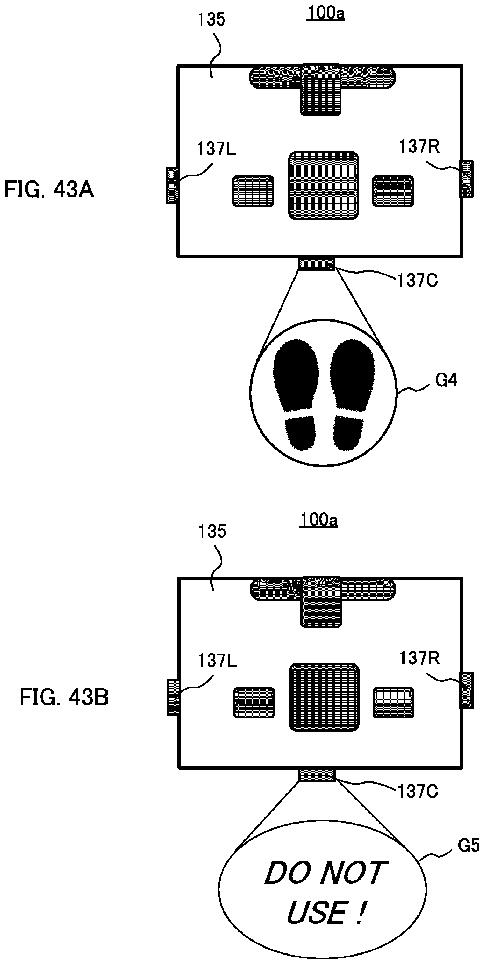

FIG. 43 and FIG. 43B illustrate examples for projecting the information using the center projector 137C. FIG. 43A projects a footmark as guide information G4 in front of the information processing device 100a by the projector 137C. This footmark indicates a position for the entrant P who operates the information processing device 100a to stand in order to correctly carry out the facial recognition. In FIG. 43B, guide information G5 indicating that the information processing device 100a cannot be used for some reason is projected on a front floor of the information processing device 100a.

As described above, according to the seventh example embodiment, it is possible to provide various types of information for the entrant P using the information processing device 100a by the projector 137. Note that, the seventh example embodiment can be implemented in one of or in combination with two or more of the first example embodiment to the sixth example embodiment. In particular, in the sixth example embodiment, it is possible to guide the correct destination to Japanese or pre-registered foreigners who have operated the information processing device 100 by accident using the projector 137 of the present example embodiment. In addition, by displaying guides in the official language based on the passport, it is possible to provide the guides that are easy for the entrant to understand.

### <Eighth Example Embodiment>

Next, an eighth example embodiment of the present disclosure will be described.

### [Basic Concept]

A configuration of the information processing device 100 according to the eighth example embodiment is basically the same as that of the first example embodiment, and includes the appearance configuration illustrated in FIG. 2 and the functional configuration illustrated in FIG. 4. The information processing device 100 according to the eighth example embodiment automatically adjusts heights of the touch panel 117 and the table 135 according to the height of the entrant P or the like.

As illustrated in FIG. 2, the facial recognition cameras 118 are provided on the touch panel 117 of the information processing device 100, and the touch panel 117 is movable in the vertical direction along the bar 134 by the height adjustment mechanism 122. Moreover, the passport reader 119 and the two fingerprint scanners 120 are provided on the upper surface of the table 135 of the information processing device 100, and the table 135 is movable in the vertical direction by the height adjustment mechanism 122.

In the eighth example embodiment, the height adjustment mechanism 122 independently moves the touch panel 117 and the table 135 up and down to adjust the height. In detail, the height of the touch panel 117 is adjusted based on the height of the face of the entrant P standing in front of the information processing device 100. On the other hand, the inventors of the present application have found that the fingerprint scanners are easiest to use when these are at an elbow level of a user, and the height of the table 135 is adjusted based on the height of the elbow of the entrant P. In the eighth example embodiment, the height of the table 135 is adjusted based on the height of the elbow of the entrant P.

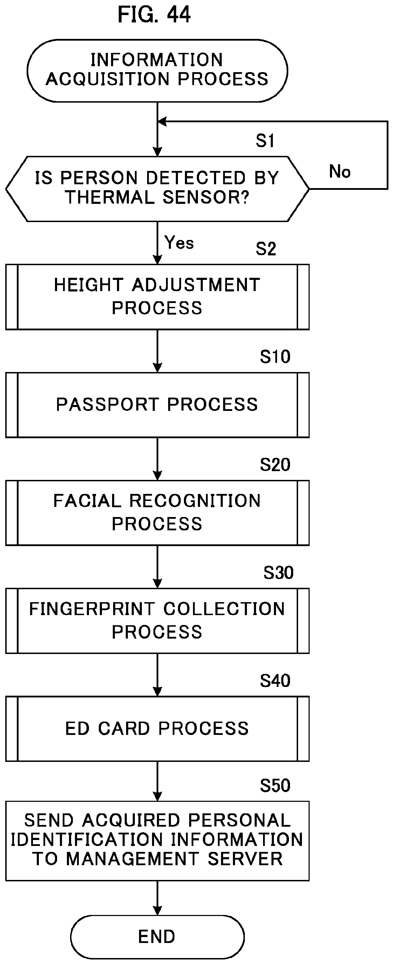

FIG. 44 is a flowchart illustrating an information acquisition process according to the eighth example embodiment. As can be understood from comparing with the flowchart in FIG. 6, in the information acquisition process of the eighth example embodiment, a height adjustment process (step S2) is provided between steps S1 and S10. When the thermal sensor 115 detects the entrant P in step S1, the information processing device 100 performs the height adjustment process and adjusts the height of the touch panel 117 and the table 135 of the information processing device 100 in accordance with the entrant P. Except for this point, the information acquisition process of the eighth example embodiment is the same as the information acquisition process of the first example embodiment.

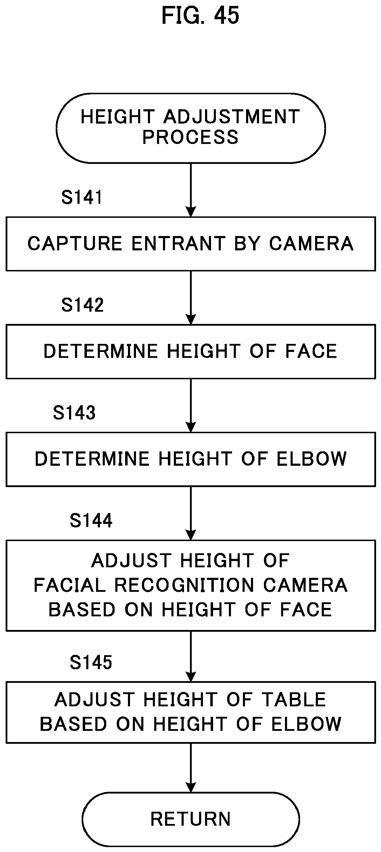

FIG. 45 is a flowchart of the height adjustment process. First, the information processing device 100 captures the entrant P standing in front of the information processing device 100 using a camera (step S141). The camera in this case may correspond to either of or both the surveillance camera 116 and the facial recognition cameras 118. Next, the information processing device 100 determines the height of the face of the entrant P based on the captured images of the camera (step S142). Moreover, the information processing device 100 determines the height of the elbow of the entrant based on the captured images of the camera (step S143). Note that, the height of the face corresponds to an example of a first height, and the height of the elbow face corresponds to an example of a second height.

Next, the height adjustment mechanism 122 adjusts the height of the touch panel 117 based on the height of the face of the entrant P (step S144). In detail, the height adjustment mechanism 122 adjusts the height of the touch panel 117 so that the face of the entrant P is positioned between the upper facial recognition camera 118A and the lower facial recognition camera 118B which are provided on the touch panel 117. Next, the height adjustment mechanism 122 adjusts the height of the table 135 to approximately correspond to the height of the elbow of the entrant P (step S145). After that, the height adjustment process is terminated. In the above-described process, either of or both the surveillance camera 116 and the facial recognition cameras 118 correspond to an example of a capturing means, and the height adjustment mechanism 122 corresponds to an example of a height adjusting means.

As described above, in the eighth example embodiment, heights of the facial recognition cameras 118 and the fingerprint scanner 120 are adjusted independently to match the height of the face of the entrant P. Therefore, it is possible to appropriately adjust the heights of the facial recognition cameras 118 and the fingerprint scanners 120 for the entrants P with various body forms. Note that the eighth example embodiment can be implemented in one of or in combination with two or more of the first to seventh example embodiments.

### [Modification]

In the above example, the height of the table 135 on which the fingerprint scanners 120 are provided is adjusted based on the height of the elbow of the entrant P; however, the height of the elbow may be corrected if necessary. In a case where the entrant P who is in front of the information processing device 100 is moving, for instance, in a case where the entrant P is being captured by the camera in a state in which the entrant P is walking toward the information processing device 100, or in a case where the entrant P is taking out something from a bag, the elbow height is not stable. In this case, the elbow height may be determined by considering a height of a shoulder, a waist, or the like of the entrant P captured by the camera. Moreover, while the height of the elbow is not stable, it is refrained to acquire the height of the elbow or to adjust the height, and the height of the elbow is determined and the height of the table is adjusted when the height of the elbow becomes stable for a certain period of time (when the height of the elbow is not changed for the certain period of time).

### <Ninth Example Embodiment>

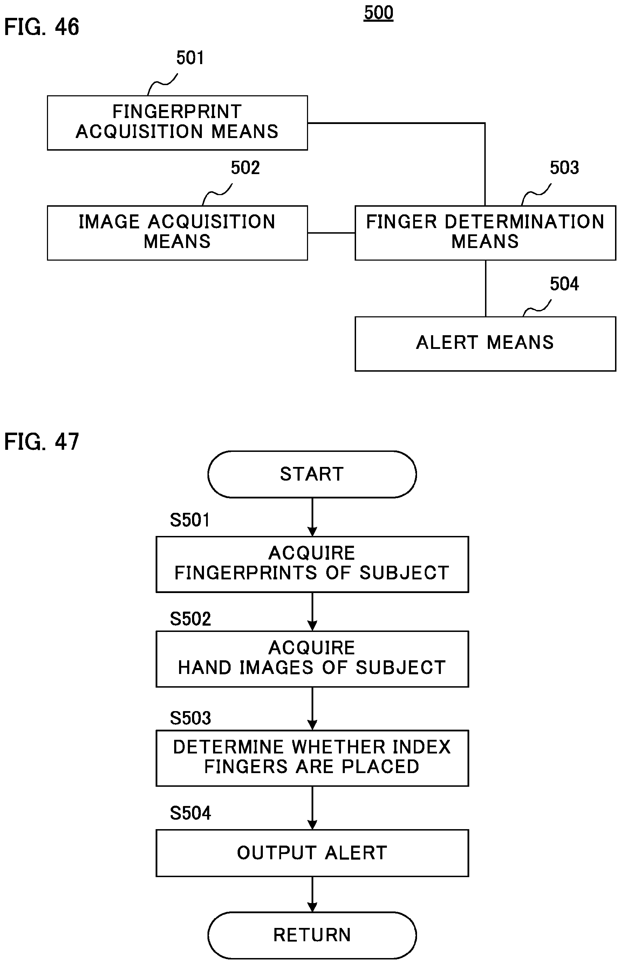

Next, a ninth example embodiment of the present disclosure will be described. FIG. 46 is a block diagram illustrating a configuration of an information processing device according to the ninth example embodiment. The information processing device 500 includes a fingerprint acquisition means 501, an image acquisition means 502, a finger determination means 503, and an alert means 504. The fingerprint acquisition means 501 uses a fingerprint scanning device to acquire fingerprints of a subject. The image acquisition means 502 acquires hand images of a subject who is placing fingers on the fingerprint scanning device. The finger determination means 503 determines whether or not the subject is placing index fingers on the fingerprint scanning device based on the hand images. The alert means 504 outputs an alert in a case where the subject does not place the index fingers on the fingerprint scanning device.

FIG. 47 is a flowchart illustrating the information processing according to the ninth example embodiment. This treatment is realized by the processor 112 illustrated in FIG. 4, which executes a program prepared in advance. First, the fingerprint acquisition means 501 acquires the fingerprints of the subject by using a fingerprint reader (step S501). Next, the image acquisition means 502 acquires hand images of the subject in which fingers are placed on the fingerprint scanning device in step S502. The finger determination means 503 determines whether or not the subject is placing the index fingers on the fingerprint scanning device based on the hand images (step S503). The alert means 504 outputs an alert (step S504) when the subject does not place the index fingers on the fingerprint scanning device.

According to the ninth example embodiment, when the target does not correctly place the index fingers on the fingerprint scanning device, it is possible to issue the alert, and to detect an irregularity committed by the subject at a time of a fingerprint collection.

A part or all of the example embodiments described above may also be described as the following supplementary notes, but not limited thereto.

### (Supplementary note 1)

1. An information processing device comprising:
   a fingerprint acquisition means configured to acquire fingerprints of a subject by using a fingerprint scanning device;
   an image acquisition means configured to acquire hand images of the subj ect;
   a finger determination means configured to determine based on the hand images whether or not the subject is placing index fingers on the fingerprint scanning device; and
   an alert means configured to output an alert in a case where the subject does not place the index fingers on the fingerprint scanning device.

### (Supplementary note 2)

2. The information processing device according to supplementary note 1, wherein the alert means displays an image including the hand images and a message on a display section.

### (Supplementary note 3)

3. The information processing device according to supplementary note 1 or 2, further comprising a display control means configured to display a hand guide which represents a state where the index fingers are correctly placed on the fingerprint scanning device by superimposing on the hand images, in addition to displaying the hand images on a display section.

### (Supplementary note 4)

4. The information processing device according to any one of supplementary notes 1 to 3, further comprising a passport information acquisition means configured to acquire passport information by using a passport reading device, wherein
when a passport is being placed on the passport reading device after the passport information acquisition means reads the passport information from the passport, the alert means outputs a misplacement alert for prompting to have the passport that is on the passport reader.

### (Supplementary note 5)

5. The information processing device according to supplementary note 4, further comprising a facial recognition means configured to perform a facial recognition of the targe after the passport information is read by the passport information acquisition means, wherein
the fingerprint acquisition means acquires fingerprints of the subject subsequent to the facial recognition, and
the alert means displays the misplacement alert after the facial recognition ends and after the fingerprints are acquired.

### (Supplementary note 6)

6. The information processing device according to any one of supplementary notes 1 to 5, further comprising
a passport information acquisition means configured to acquire passport information by using a passport reading device; and
a destination guide means configured to display information for guiding to a next destination for the subject based on the passport information.

### (Supplementary note 7)

7. The information processing device according to supplementary note 6, further comprising a projector configured to project information on a floor near the information processing device, wherein
the destination guide means projects the information for guiding to the next destination on the floor by using the projector.

### (Supplementary note 8)

8. The information processing device according to supplementary note 7, wherein the destination guide means projects the information for guiding to the next destination in a language that is determined based on the passport information.

### (Supplementary note 9)

9. The information processing device according to any one of supplementary notes 1 to 8, further comprising
a capturing means configured to capture images of the subject; and
a height adjustment means configured to determine a height of a face of the subject and a height of an elbow based on the captured images of the capturing means, and adjust a height of the fingerprint scanning device based on the height of the elbow in addition to adjusting a height of a facial recognition camera based on the height of the face.

### (Supplementary note 10)

10. The information processing device according to any one of supplementary notes 1 to 9, further comprising
a capturing means configured to capture images of the subject; and
a facial recognition means configured to acquire a facial image of the subject and perform a facial recognition after a passport information acquisition means acquires passport information of the subject,
wherein the facial recognition means omits acquiring of the facial image after the passport information is acquired, when the facial image that satisfies a certain reference is acquired by the capturing means during acquiring of the passport information.

### (Supplementary note 11)

11. An information processing method, comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.

### (Supplementary note 12)

12. A recording medium storing a program, the program causing a computer to perform a process comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.

While the disclosure has been described with reference to the example embodiments and examples, the disclosure is not limited to the above example embodiments and examples. It will be understood by those of ordinary skill in the art that various changes in form and details may be made therein without departing from the spirit and scope of the present disclosure as defined by the claims.

### DESCRIPTION OF SYMBOLS

- 1: Passport control system
- 5: PC
- 100: Information processing device
- 115: Thermal sensor
- 116: Surveillance camera
- 117: Touch panel
- 118: Facial recognition camera
- 119: Passport reader
- 120: Fingerprint scanner
- 121: Camera for hands
- 122: Height adjustment mechanism
- 125: Finger determination unit
- 200: Management server
- 212: Processor
- 300: Tablet
- 312: Processor
- 314: Touch panel
- P: Entrant

## Claims

1. An information processing device comprising:
a fingerprint acquisition means configured to acquire fingerprints of a subject by using a fingerprint scanning device;
an image acquisition means configured to acquire hand images of the subject;
a finger determination means configured to determine based on the hand images whether or not the subject is placing index fingers on the fingerprint scanning device; and
an alert means configured to output an alert in a case where the subject does not place the index fingers on the fingerprint scanning device.

2. The information processing device according to claim 1, wherein the alert means displays an image including the hand images and a message on a display section.

3. The information processing device according to claim 1 or 2, further comprising a display control means configured to display a hand guide which represents a state where the index fingers are correctly placed on the fingerprint scanning device by superimposing on the hand images, in addition to displaying the hand images on a display section.

4. The information processing device according to any one of claims 1 to 3, further comprising a passport information acquisition means configured to acquire passport information by using a passport reading device, wherein
when a passport is being placed on the passport reading device after the passport information acquisition means reads the passport information from the passport, the alert means outputs a misplacement alert for prompting to have the passport that is on the passport reader.

5. The information processing device according to claim 4, further comprising a facial recognition means configured to perform a facial recognition of the targe after the passport information is read by the passport information acquisition means, wherein
the fingerprint acquisition means acquires fingerprints of the subject subsequent to the facial recognition, and
the alert means displays the misplacement alert after the facial recognition ends and after the fingerprints are acquired.

6. The information processing device according to any one of claims 1 to 5, further comprising
a passport information acquisition means configured to acquire passport information by using a passport reading device; and
a destination guide means configured to display information for guiding to a next destination for the subject based on the passport information.

7. The information processing device according to claim 6, further comprising a projector configured to project information on a floor near the information processing device, wherein
the destination guide means projects the information for guiding to the next destination on the floor by using the projector.

8. The information processing device according to claim 7, wherein the destination guide means projects the information for guiding to the next destination in a language that is determined based on the passport information.

9. The information processing device according to any one of claims 1 to 8, further comprising
a capturing means configured to capture images of the subject; and
a height adjustment means configured to determine a height of a face of the subject and a height of an elbow based on the captured images of the capturing means, and adjust a height of the fingerprint scanning device based on the height of the elbow in addition to adjusting a height of a facial recognition camera based on the height of the face.

10. The information processing device according to any one of claims 1 to 9, further comprising
a capturing means configured to capture images of the subject; and
a facial recognition means configured to acquire a facial image of the subject and perform a facial recognition after a passport information acquisition means acquires passport information of the subject,
wherein the facial recognition means omits acquiring of the facial image after the passport information is acquired, when the facial image that satisfies a certain reference is acquired by the capturing means during acquiring of the passport information.

11. An information processing method, comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.

12. A recording medium storing a program, the program causing a computer to perform a process comprising:
acquiring fingerprints of a subject by using a fingerprint scanning device;
acquiring hand images of the subject;
determining based on the hand images whether or not the subject is placing index fingers on the fingerprint scanning device; and
outputting an alert in a case where the subject does not place the index fingers on the fingerprint scanning device.
